# EUROPEAN PATENT APPLICATION

(11) **EP 3 357 721 A1**
(43) Date of publication of application: **08.08.2018**
(21) Application number: 16851272.1
(22) Date of filing: 20.09.2016
(51) Int. Cl.: B60G 17/04, B60G 17/056, F16F 9/46

(54) **SUSPENSION DEVICE**

(30) Priority: 30.09.2015 JP 2015193144
(71) Applicant: KYB Corporation, Tokyo 105-6111 (JP)
(72) Inventor: MASAMURA, Tatsuya, Tokyo 105-6111 (JP)
(74) Representative: Grünecker Patent- und Rechtsanwälte PartG mbB
(86) International application number: PCT/JP2016/077705
(87) International publication number: WO 2017/057098

(57) **Abstract**

A suspension device (S) includes a damper (D), a pump (4), an accumulator (Acc), a hydraulic pressure circuit (FC) disposed between the pump (4) and the accumulator (Acc), and the damper (D) configured to adjust a thrust of the damper (D), a blow flow passage (BL) connecting the accumulator (Acc) to a reservoir (R), and a relief valve (Re) disposed in the blow flow passage (BL) and opening when the relief valve (Re) reaches a relief pressure to allow a flow from the accumulator (Acc) side to the reservoir (R) side.

## Description

### TECHNICAL FIELD

The present invention relates to a suspension device.

### BACKGROUND ART

Some suspension devices of this type, for example, function as active suspensions interposed between a vehicle body and an axle of a vehicle. Specifically, the suspension device includes a damper that includes a cylinder and a piston, which is movably inserted into the cylinder to partition the inside of the cylinder into an extension-side chamber and a contraction-side chamber, a pump, a reservoir, and a hydraulic pressure circuit, which selectively connects the extension-side chamber and the contraction-side chamber to the pump and the reservoir (for example, see JP2016-88358A).

This suspension device controls thrust of the damper by the hydraulic pressure circuit to cause the damper to produce a desired thrust.

### SUMMARY OF INVENTION

With the above-described suspension device, when the damper extends/contracts by a vibration input from a road surface, if a flow rate of discharge from the pump falls below a flow rate required at the damper, hydraulic oil is supplied from the reservoir to the damper without via the pump.

Therefore, to facilitate the supply of the hydraulic oil from the reservoir to the damper, the inside of the reservoir needs to be pressurized to some extent. Accordingly, with this suspension device, the hydraulic pressure circuit configuration is designed as a closed circuit to pressurize the reservoir.

In order to actually mount the suspension device thus configured on a vehicle, it is necessary to feed hydraulic oil into the cylinder after assembling the suspension device to the vehicle.

However, the hydraulic pressure circuit configuration of the suspension device becomes the closed circuit and therefore the reservoir needs to be pressurized, a dedicated device to pressurize and feed the hydraulic oil after vacuum drawing of the inside of the hydraulic pressure circuit is required for feeding the hydraulic oil into the cylinder. This causes a problem of poor work efficiency.

An object of the present invention is to provide a suspension device to which liquid can be easily fed without the use of the dedicated device.

According to one aspect of the present invention, a suspension device includes a damper, a pump, an accumulator, a hydraulic pressure circuit, a reservoir, a blow flow passage, and a relief valve. The damper includes a cylinder and a piston. The piston is movably inserted into the cylinder to partition an inside of the cylinder into an extension-side chamber and a contraction-side chamber. The hydraulic pressure circuit is disposed between the pump and the accumulator, and the damper. The hydraulic pressure circuit is configured to adjust a thrust of the damper. The reservoir is connected to a suction side of the pump. The blow flow passage connects the accumulator to the reservoir. The relief valve is disposed in the blow flow passage. The relief valve opens when the relief valve reaches a relief pressure to allow a flow from the accumulator side to the reservoir side.

### BRIEF DESCRIPTION OF DRAWINGS

FIG. 1 is a drawing illustrating a basic configuration of a suspension device according to first to third embodiments of the present invention.
FIG. 2 is a drawing illustrating a specific configuration of the suspension device according to the first embodiment.
FIG. 3 is a drawing where the suspension device according to the first embodiment is interposed between a sprung member and an unsprung member of a vehicle.
FIG. 4 is a drawing illustrating properties of a thrust when the suspension device according to the first embodiment is caused to function as an active suspension.
FIG. 5 is a drawing illustrating properties of a thrust when the suspension device according to the first embodiment is caused to function as a semi-active suspension.
FIG. 6 is a drawing illustrating properties of a thrust while the suspension device according to the first embodiment is in failure.
FIG. 7 is a drawing illustrating a specific configuration of the suspension device according to the second embodiment.
FIG. 8 is a drawing illustrating properties of a thrust when the suspension devices according to the second and the third embodiments are caused to function as the active suspensions.
FIG. 9 is a drawing illustrating properties of a thrust when the suspension devices according to the second and the third embodiments are caused to function as the semi-active suspensions.
FIG. 10 is a drawing illustrating properties of a thrust while the suspension devices according to the second and the third embodiments are in failure.
FIG. 11 is a drawing illustrating a specific configuration of the suspension device according to the third embodiment.

### DESCRIPTION OF EMBODIMENTS

### <First Embodiment>

The following describes a suspension device S1 according to the first embodiment of the present invention with reference to the drawings. First, the following describes a suspension device S as a basic configuration of the suspension device S1.

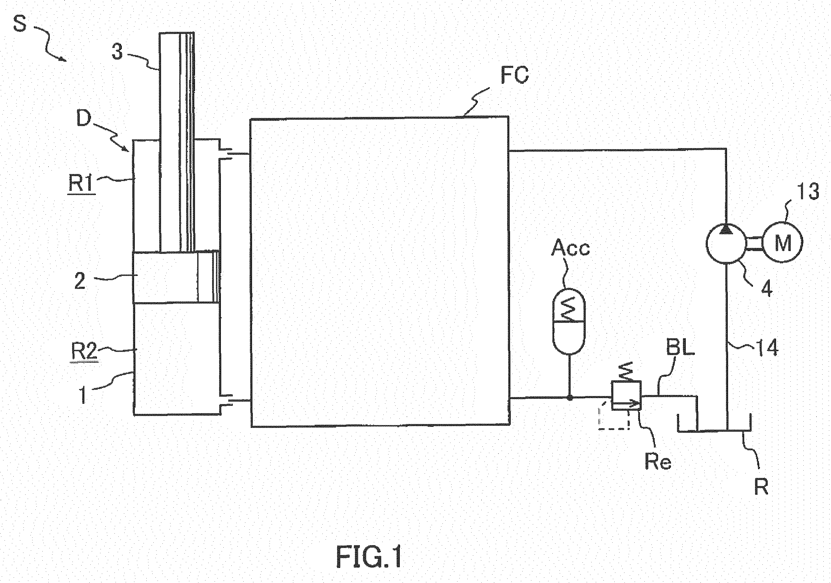

As illustrated in FIG. 1, the suspension device S includes a damper D, which includes a cylinder 1 and a piston 2, a pump 4, an accumulator Acc, a hydraulic pressure circuit FC, a reservoir R, which is connected to a suction side of the pump 4, a blow flow passage BL, which connects the accumulator Acc to the reservoir R, and a relief valve Re, which is disposed in the blow flow passage BL. The piston 2 is movably inserted into the cylinder 1 to partition the inside of the cylinder 1 into an extension-side chamber R1 and a contraction-side chamber R2. The hydraulic pressure circuit FC is disposed between the pump 4 and the accumulator Acc, and the damper D; and can adjust a thrust of the damper D.

The damper D includes a rod 3 movably inserted into the cylinder 1 and joined to the piston 2. In the suspension device S, the rod 3 is inserted through only to the inside of the extension-side chamber R1, and the damper D is a so-called a single-rod damper. It should be noted that the reservoir R is disposed independent from the damper D as illustrated in FIG. 1. Although not illustrated in detail, an outer pipe arranged at an outer peripheral side of the cylinder 1 in the damper D may be disposed, and the reservoir R may be formed of an annular clearance between the cylinder 1 and the outer pipe.

It should be noted that to apply the suspension device S to a vehicle, it is only necessary that the cylinder 1 is joined to one of a sprung member and an unsprung member of the vehicle, the rod 3 is joined to the other of the sprung member and the unsprung member, and the suspension device S is interposed between the sprung member and the unsprung member.

The extension-side chamber R1 and the contraction-side chamber R2 are filled with, for example, liquid such as hydraulic oil as liquid, and the reservoir R internally accumulates liquid. The accumulator Acc is also filled with liquid, and this liquid is pressurized by a gas spring or a metal spring or both of these springs. As the liquid filling the insides of the extension-side chamber R1, the contraction-side chamber R2, the accumulator Acc, and the reservoir R, liquid such as water and water solution are applicable in addition to the hydraulic oil. In this embodiment, a chamber to be compressed during an extension stroke is configured as the extension-side chamber R1 and a chamber to be compressed during a contraction stroke is configured as the contraction-side chamber R2.

The pump 4 is configured as a one-way discharge type that suctions liquid from a suction side and discharges the liquid from a discharge side. The pump 4 is driven by a motor 13. Regardless of a direct current and an alternate current, various kinds of motors, for example, a brushless motor, an induction motor, and a synchronous motor can be employed as the motor 13.

The suction side of the pump 4 is connected to the reservoir R with a pump passage 14, and the discharge side is connected to the hydraulic pressure circuit FC. Accordingly, when driven by the motor 13, the pump 4 suctions the liquid from the reservoir R and discharges the liquid to the hydraulic pressure circuit FC.

The hydraulic pressure circuit FC supplies the liquid discharged from the pump 4 to any one of the extension-side chamber R1 and the contraction-side chamber R2 in the damper D. The hydraulic pressure circuit FC discharges surplus liquid among the liquid discharged from the other of the extension-side chamber R1 and the contraction-side chamber R2 and the liquid discharged from the pump 4 to the accumulator Acc. The hydraulic pressure circuit FC adjusts pressures of the extension-side chamber R1 and the contraction-side chamber R2 to control the thrust of the damper D. That is, the hydraulic pressure circuit FC causes the damper D to function as an active suspension.

The blow flow passage BL connects the accumulator Acc to the reservoir R. The blow flow passage BL includes the relief valve Re. When a pressure of the accumulator Acc reaches a relief pressure, the relief valve Re opens to allow a flow of the liquid heading for the reservoir R side from the accumulator Acc side. The relief pressure at the relief valve Re is set to be equal to or more than a minimum pressure required for behavior compensation by the hydraulic pressure circuit FC. Too high relief pressure increases energy consumed by the pump 4; therefore, setting the minimum pressure is preferable.

To feed the liquid to the suspension device S thus configured, the liquid is first fed to the reservoir R and then the pump 4 is driven. When the liquid discharged from the pump 4 is delivered to the extension-side chamber R1 in the damper D via the hydraulic pressure circuit FC, the damper D contracts. When the damper D contracts the most, the liquid cannot be fed into the damper D any further. In view of this, the surplus liquid is guided to the accumulator Acc via the hydraulic pressure circuit FC and the inside of the accumulator Acc is filled with the liquid. When an upstream pressure of the relief valve Re reaches the relief pressure, the liquid is refluxed to the reservoir R.

Basically, the inside of the damper D, the inside of the hydraulic pressure circuit FC, and the inside of the accumulator Acc are thus filled with the liquid. Stopping the pump 4 pressurizes the inside of the damper D and the inside of the hydraulic pressure circuit FC to a pressure equal to the relief pressure of the relief valve Re by the accumulator Acc. It should be noted that in the case where air remains in the damper D, while the extension-side chamber R1 and the contraction-side chamber R2 are sequentially connected to the accumulator Acc side via the hydraulic pressure circuit FC, the damper D is caused to run in full stroke. Doing so discharges the air remained in the damper D from the inside of the damper D and blows off the air to the reservoir R via the relief valve Re.

Thus feeding the liquid to the reservoir R and driving the pump 4 allow the feed of liquid to the suspension device S. This eliminates the need for a dedicated device and ensures the easy feed of liquid. Additionally, since the inside of the damper D and the inside of the hydraulic pressure circuit FC are pressurized to the pressure equal to the relief pressure of the relief valve Re by the accumulator Acc, a system internal pressure requested by the suspension device S is compensated, eliminating the need for pressurized feed liquid. Accordingly, the suspension device S allows the easily feed of liquid without the use of the dedicated device.

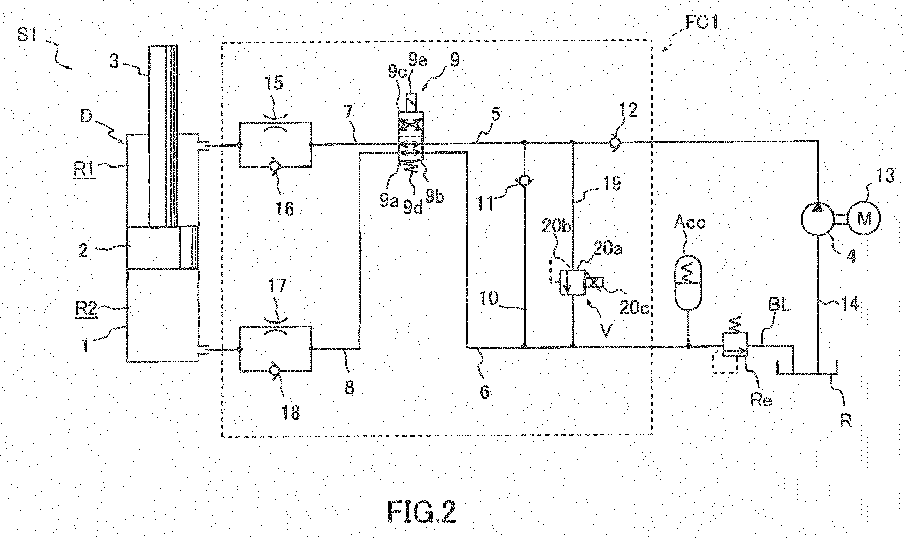

Next, the following specifically describes the suspension device S1 including a specific hydraulic pressure circuit. The suspension device S1 according to the first embodiment includes a hydraulic pressure circuit FC1 illustrated in FIG. 2.

The hydraulic pressure circuit FC1 includes a supply passage 5 connected to the discharge side of the pump 4, a discharge passage 6 connected to the accumulator Acc, an extension-side passage 7 connected to the extension-side chamber R1, a contraction-side passage 8 connected to the contraction-side chamber R2, an extension-side damping valve 15 disposed in the extension-side passage 7, a contraction-side damping valve 17 disposed in the contraction-side passage 8, a switching valve 9, which is disposed between the supply passage 5, the discharge passage 6, the extension-side passage 7, and the contraction-side passage 8 to selectively connect one of the extension-side passage 7 and the contraction-side passage 8 to the supply passage 5 and connect the other of the extension-side passage 7 and the contraction-side passage 8 to the discharge passage 6, a control valve V, which can adjust the pressure of the supply passage 5 according to a supplied current, a suction passage 10, which connects the supply passage 5 to the discharge passage 6, a suction check valve 11, which is disposed in the suction passage 10 and allows only a flow of liquid heading for the supply passage 5 from the discharge passage 6, and a supply-side check valve 12, which is disposed between the control valve V and the pump 4 in the supply passage 5 and allows only a flow heading for the control valve V side from the pump 4 side.

The suction side of the pump 4 is connected to the reservoir R by the pump passage 14, and the discharge side is connected to the supply passage 5. Accordingly, when driven by the motor 13, the pump 4 suctions the liquid from the reservoir R and discharges the liquid to the supply passage 5. As described above, the discharge passage 6 is communicated with the accumulator Acc.

The extension-side damping valve 15 and an extension-side check valve 16 are disposed in the extension-side passage 7. The extension-side damping valve 15 provides a resistance to the flow of liquid heading for the switching valve 9 from the extension-side chamber R1. The extension-side check valve 16 is disposed in parallel with the extension-side damping valve 15 and allows only the flow of liquid heading for the extension-side chamber R1 from the switching valve 9. Thus, the extension-side check valve 16 is maintained in the close state to the flow of liquid moving from the extension-side chamber R1 to the switching valve 9; therefore, the liquid flows passing through only the extension-side damping valve 15 and flows to the switching valve 9 side. In contrast to this, since the extension-side check valve 16 is opened to the flow of liquid moving from the switching valve 9 to the extension-side chamber R1, the liquid passes through the extension-side damping valve 15 and the extension-side check valve 16 and flows heading for the extension-side chamber R1 side. Since the resistance provided to the flow of liquid at the extension-side check valve 16 is smaller than that of the extension-side damping valve 15, the liquid preferentially passes through the extension-side check valve 16 and flows heading for the extension-side chamber R1 side. The extension-side damping valve 15 may be a throttle valve allowing a bidirectional flow or may be a damping valve such as a leaf valve and a poppet valve that allows only the flow heading for the switching valve 9 from the extension-side chamber R1.

The contraction-side damping valve 17 and a contraction-side check valve 18 are disposed in the contraction-side passage 8. The contraction-side damping valve 17 provides a resistance to the flow heading for the switching valve 9 from the contraction-side chamber R2. The contraction-side check valve 18 is disposed in parallel with the contraction-side damping valve 17 and allows only the flow of liquid heading for the contraction-side chamber R2 from the switching valve 9. Thus, the contraction-side check valve 18 is maintained in the close state to the flow of liquid moving from the contraction-side chamber R2 to the switching valve 9; therefore, the liquid flows passing through only the contraction-side damping valve 17 and flows to the switching valve 9 side. In contrast to this, since the contraction-side check valve 18 is opened to the flow of liquid moving from the switching valve 9 to the contraction-side chamber R2, the liquid passes through the contraction-side damping valve 17 and the contraction-side check valve 18 and flows heading for the contraction-side chamber R2 side. Since the resistance provided to the flow of liquid at the contraction-side check valve 18 is smaller than that of the contraction-side damping valve 17, the liquid preferentially passes through the contraction-side check valve 18 and flows heading for the contraction-side chamber R2 side. The contraction-side damping valve 17 may be a throttle valve allowing a bidirectional flow or may be a damping valve constituted of a leaf valve and a poppet valve that allows only the flow heading for the switching valve 9 from the contraction-side chamber R2.

The hydraulic pressure circuit FC1 further includes the suction passage 10 that connects the supply passage 5 to the discharge passage 6. The suction check valve 11 that allows only the flow of liquid heading for the supply passage 5 from the discharge passage 6 is disposed in the suction passage 10. Accordingly, the suction passage 10 is configured as a one-way passage that allows only the flow of liquid heading for the supply passage 5 from the discharge passage 6.

The switching valve 9 is configured as an electromagnetic switching valve with four ports and two positions and includes a spool 9a, a spring 9d, and a solenoid 9e. The spool 9a is switched to an extension-side supply position 9b, which communicates between the extension-side passage 7 and the supply passage 5 and communicates between the contraction-side passage 8 and the discharge passage 6, and a contraction-side supply position 9c, which communicates between the extension-side passage 7 and the discharge passage 6 and communicates between the contraction-side passage 8 and the supply passage 5. The spring 9d biases the spool 9a to the extension-side supply position 9b. The solenoid 9e provides a thrust against the spring 9d to the spool 9a. During non-current application during which electric power is not supplied to the solenoid 9e, the spool 9a is biased by the spring 9d and takes the extension-side supply position 9b. During current application during which electric power is supplied to the solenoid 9e, the spool 9a is pressed by the thrust from the solenoid 9e and takes the contraction-side supply position 9c.

With the switching valve 9 taking the extension-side supply position 9b, the supply passage 5 is communicated with the extension-side chamber R1 through the extension-side passage 7 and the discharge passage 6 is communicated with the contraction-side chamber R2 through the contraction-side passage 8. Driving the pump 4 in this state supplies the liquid to the extension-side chamber R1 and the liquid is discharged from the contraction-side chamber R2 to the accumulator Acc, contracting the damper D. Meanwhile, with the switching valve 9 taking the contraction-side supply position 9c, the supply passage 5 is communicated with the contraction-side chamber R2 through the contraction-side passage 8 and the discharge passage 6 is communicated with the extension-side chamber R1 through the extension-side passage 7. Driving the pump 4 in this state supplies the liquid to the contraction-side chamber R2 and the liquid is discharged from the extension-side chamber R1 to the accumulator Acc, extending the damper D.

The hydraulic pressure circuit FC further includes the control valve V that controls the pressure of the supply passage 5 to which the liquid is discharged from the pump 4. Specifically, the control valve V is disposed in a control passage 19 that connects the supply passage 5 to the discharge passage 6. Adjusting a valve opening pressure ensures controlling the pressure of the supply passage 5 on the upstream side of the control valve V.

The control valve V is an electromagnetic pressure control valve in this embodiment. The control valve V includes a valve element 20a disposed in the control passage 19, a pilot passage 20b, which causes the pressure on the upstream side, the supply passage 5 side, to act on a valve opening direction of the valve element 20a as a pilot pressure, and a solenoid 20c, which provides the thrust to the valve element 20a. The solenoid 20c includes a spring and a coil (not illustrated). The spring in the solenoid 20c always biases the valve element 20a in the valve opening direction. The solenoid 20c (the coil) can generate a thrust against the spring biasing the valve element 20a during current application. At the control valve V, an amount of applied current to the solenoid 20c (the coil) can be adjusted to adjust high and low of the valve opening pressure. Furthermore, adjusting the valve opening pressure of the control valve V allows adjustment of the pressure of the supply passage 5. That is, the pressure of the supply passage 5 can be controlled to be the valve opening pressure of the control valve V. Thus, while the pressure of the supply passage 5 is adjustable according to the supplied current at the control valve V, the specific configuration of the above-described control valve V is merely one example, and the configuration is not limited to this.

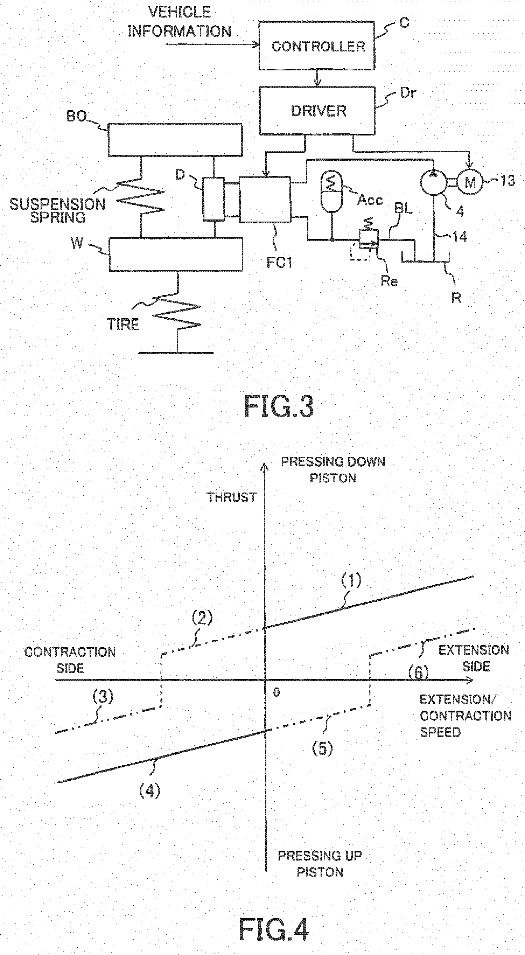

The control valve V is configured so as to obtain the valve opening pressure proportional to the amount of current supplied to the solenoid 20c. Specifically, the larger the amount of current supplied to the solenoid 20c is, the larger the valve opening pressure is. While the current is not supplied, the valve opening pressure becomes the minimum. The control valve V has a property of no pressure override where a pressure loss increases proportionate to a flow rate in a practical region of the suspension device S1. It should be noted that the practical region only needs to be a region in which the damper D extends/contracts in a range at a speed of 1 m per second in the case where, for example, the damper D is interposed between a sprung member B and an unsprung member W of the vehicle as illustrated in FIG. 3 for use. No pressure override where the pressure loss increases proportionate to the flow rate in the practical region means a property to the extent that the pressure override is negligible relative to the flow rate possibly passing through the control valve V in the case where the damper D extends/contracts in a range at a speed of 1 m per second. In this embodiment, the valve opening pressure of the control valve V during the non-current application is extremely small so as to hardly provide the resistance to the flow of passing liquid during the non-current application.

Furthermore, the suction passage 10, which connects the supply passage 5 to the discharge passage 6, is disposed in parallel with the control passage 19. In the suction passage 10, the suction check valve 11, which allows only the flow of liquid heading for the supply passage 5 from the discharge passage 6, is disposed. The suction passage 10 is configured as a one-way passage that allows only the flow of liquid heading for the supply passage 5 from the discharge passage 6.

The supply-side check valve 12 is disposed between the control valve V and the pump 4 in the supply passage 5. In more detail, the supply-side check valve 12 is disposed on the pump 4 side with respect to connecting points of the control passage 19 and the suction passage 10 in the supply passage 5. The supply-side check valve 12 allows only the flow heading for the control valve V side from the pump 4 side and blocks the opposite flow. Accordingly, even when the pressure on the switching valve 9 side becomes higher than the discharge pressure of the pump 4, the supply-side check valve 12 is closed to block a backflow of the liquid to the pump 4 side.

The suspension device S1 is configured as described above. Subsequently, the following describes operations of the suspension device S1. First, the following describes the operations during normal in which the motor 13, the pump 4, the switching valve 9, and the control valve V can normally behave.

The pump 4 is driven by the motor 13, and while the liquid discharged from the pump 4 is supplied to a chamber connected to the pump 4 among the extension-side chamber R1 and the contraction-side chamber R2 by the switching valve 9, the other chamber is communicated with the accumulator Acc through the discharge passage 6. This configuration causes the damper D to actively extend or contract to function as an actuator. In the case where the thrust generated in the damper D is in the extension direction of the damper D, the switching valve 9 is set to the contraction-side supply position 9c to connect the contraction-side chamber R2 to the supply passage 5 and to connect the extension-side chamber R1 to the accumulator Acc. On the contrary, in the case where the thrust generated in the damper D is in the contraction direction of the damper D, the switching valve 9 is set to the extension-side supply position 9b to connect the extension-side chamber R1 to the supply passage 5 and to connect the contraction-side chamber R2 to the accumulator Acc. At this time, adjusting the pressure of the supply passage 5 by the control valve V can control a magnitude of the thrust in the extension direction or the contraction direction of the damper D.

As illustrated in FIG. 3, to control the thrust, for example, it is only necessary provide a controller C and a driver Dr. The controller C settles the amount of current provided to the control valve V, the selection of the position of the switching valve 9, and the amount of current provided to the motor 13 driving the pump 4. The driver Dr supplies the currents to the control valve V, the switching valve 9, and the motor 13 as settled by the controller C by receiving a command from the controller C. Specifically, the controller C obtains information with which a vibration state of the vehicle required for a control rule suitable for vibration reduction of the vehicle can be grasped, for example, vehicle information such as information on an acceleration and a speed of the sprung member B and the unsprung member W in a vertical direction and information on an extension/contraction speed and extension/contraction acceleration of the damper D to find a target thrust to be generated by the damper D in accordance with the control rule. The controller C settles the amount of current provided to the control valve V required to generate the thrust by the damper D as the target thrust, the selection of the extension-side supply position 9b and the contraction-side supply position 9c for the switching valve 9, and the amount of current provided to the motor 13 driving the pump 4. For example, the driver Dr includes a driving circuit that performs PWM driving on the solenoid 20c in the control valve V and the solenoid 9e in the switching valve 9 and a driving circuit that performs PWM driving on the motor 13. When the driver Dr receives a command from the controller C, the driver Dr supplies the solenoid 20c, the solenoid 9e, and the motor 13 with the currents as settled by the controller C. It should be noted that the driving circuits in the driver Dr each may be a driving circuit other than the driving circuit that performs the PWM driving. With the target thrust generated in the damper D in the extension direction of the damper D, the controller C selects the contraction-side supply position 9c for the switching valve 9. With the target thrust generated in the damper D in the contraction direction of the damper D, the controller C selects the extension-side supply position 9b for the switching valve 9. To switch the switching valve 9 to the selected position as described above, the driver Dr supplies the solenoid 9e with the current or stops supplying the current. Specifically in this embodiment, to cause the damper D to perform the contraction operation, it is only necessary that the current is not supplied to the solenoid 9e in the switching valve 9 to set the non-current application and the switching valve 9 is switched to the extension-side supply position 9b to supply the liquid to the extension-side chamber R1 and discharge the liquid from the contraction-side chamber R2 to the accumulator Acc. On the contrary, to cause the damper D to perform the extension operation, it is only necessary that the current is supplied to the solenoid 9e in the switching valve 9 and the switching valve 9 is switched to the contraction-side supply position 9c to supply the liquid to the contraction-side chamber R2 and discharge the liquid from the extension-side chamber R1 to the accumulator Acc. It is only necessary to select a control rule suitable for the vehicle as the control rule used to control the thrust in the suspension device S1, for example, a control rule excellent in the vibration reduction of the vehicle, for example, skyhook control may be employed. In this case, while the controller C and the driver Dr are described as separate bodies, one control device may have the functions of the controller C and the driver Dr and control the suspension device S1. The information input to the controller C only needs to be information suitable for the control rule employed by the controller C. Although not illustrated, this information only needs to be sensed by a sensor or a similar device and be input to the controller C.

The operation in the case where the damper D is actively extended/contracted has been described above. During vehicle running, the damper D receives disturbance by unevenness on a road surface and extends/contracts. The following describes the operations in the light of the extension/contraction of the damper D receiving the disturbance.

First, the following describes the operation in a state of driving the pump 4 and discharging the liquid to the supply passage 5. When the damper D receives the disturbance and extends/contracts, four cases are assumed by categorizing the cases by the direction that the damper D generates the thrust and the direction that the damper D extends/contracts.

First, as the first case, the following describes case where the thrust of pressing down the piston 2 is produced by the suspension device S1 and the damper D performs the extension operation by external force. In this case, the direction of the thrust generated by the damper D is the direction of pressing down the piston 2, and the liquid needs to be supplied to the extension-side chamber R1. In this case, the switching valve 9 is switched to take the extension-side supply position 9b to connect the extension-side chamber R1 to the supply passage 5 and the contraction-side chamber R2 is communicated with the accumulator Acc through the discharge passage 6.

While the damper D is in the extension operation, the volume of the extension-side chamber R1 reduces. Therefore, the liquid by the reduced amount is discharged from the extension-side chamber R1 through the extension-side damping valve 15, further passes through the supply passage 5 and the control valve V, and then flows to the accumulator Acc. It should be noted that since the supply-side check valve 12 is disposed in the supply passage 5, even when the pressure of the supply passage 5 becomes dynamically higher than the discharge pressure of the pump 4, the liquid does not flow adversely to the pump 4 side. Meanwhile, the liquid corresponding to an amount of enlarged volume is supplied from the accumulator Acc to the contraction-side chamber R2 whose volume is increased via the discharge passage 6.

Since the pressure of the supply passage 5 is controlled to be the valve opening pressure of the control valve V by the control valve V, the pressure of the extension-side chamber R1 becomes higher than the pressure of the supply passage 5 by the amount of pressure loss generated when the liquid discharged from the extension-side chamber R1 passes through the extension-side damping valve 15. Accordingly, the pressure of the extension-side chamber R1 in this case becomes higher than the pressure of the accumulator Acc by the amount of the pressure found by superimposing the amount of pressure loss by the extension-side damping valve 15 on the valve opening pressure of the control valve V. Meanwhile, the pressure of the contraction-side chamber R2 is equal to that of the accumulator Acc, and the pressure of the extension-side chamber R1 is regarded as a differential pressure with the pressure of the accumulator Acc. Accordingly, the pressure of the extension-side chamber R1 becomes higher than that of the contraction-side chamber R2 by a value found by adding the pressure by the amount of pressure loss generated at the extension-side damping valve 15 to the valve opening pressure of the control valve V, and the damper D produces the thrust to reduce the extension. The extension/contraction speed of the damper D with the maximum valve opening pressure of the control valve V and the property of the produced thrust become the property illustrated by a line (1) in FIG. 4. It should be noted that the graph illustrated in FIG. 4 indicates the thrust of the damper D on the vertical axis and indicates the extension/contraction speed of the damper D on the horizontal axis.

Subsequently, as the second case, the following describes case where the thrust of pressing down the piston 2 is produced by the suspension device S1 and the damper D performs the contraction operation by the external force. In this case, the direction of the thrust generated by the damper D is the direction of pressing down the piston 2, and therefore the liquid needs to be supplied to the extension-side chamber R1. In this case as well, the switching valve 9 is switched to take the extension-side supply position 9b to connect the extension-side chamber R1 to the supply passage 5 and the contraction-side chamber R2 is communicated with the accumulator Acc through the discharge passage 6.

While the damper D is in the contraction operation, the volume of the extension-side chamber R1 increases. In the case where the contraction speed of the damper D is slow and the flow rate of discharge of the pump 4 is equal to or more than the amount of increased volume per unit time of the extension-side chamber R1, the flow rate of discharge of the pump 4 is larger than the flow rate required for the extension-side chamber R1. In this case, the liquid discharged from the pump 4 flows into the extension-side chamber R1 through the extension-side check valve 16, and the surplus liquid not absorbed into the extension-side chamber R1 among the flow rate of discharge of the pump 4 flows to the accumulator Acc through the control valve V. Accordingly, the pressure of the extension-side chamber R1 becomes equal to the pressure of the supply passage 5 and is controlled by the valve opening pressure of the control valve V. Meanwhile, from the contraction-side chamber R2 whose volume is reduced, the liquid by the reduced amount of volume is discharged to the accumulator Acc via the contraction-side damping valve 17 and the discharge passage 6. The pressure of the contraction-side chamber R2 becomes higher than the pressure of the accumulator Acc by the amount of pressure loss generated when the liquid discharged from the contraction-side chamber R2 passes through the contraction-side damping valve 17. Accordingly, in such situation, although the pressure of the extension-side chamber R1 becomes equal to the valve opening pressure of the control valve V, the pressure of the contraction-side chamber R2 becomes higher than the pressure of the accumulator Acc by the amount of pressure loss by the contraction-side damping valve 17. The larger the flow rate discharged from the contraction-side chamber R2 is, the larger the pressure loss is by the amount. Accordingly, the pressure of the extension-side chamber R1 becomes higher than that of the contraction-side chamber R2 by a value found by subtracting the pressure by the amount of pressure loss, which is generated at the contraction-side damping valve 17, from the differential pressure adjusted with the control valve V, and the damper D produces the thrust to assist the contraction. At this time, the property of the thrust of the damper D with the maximum valve opening pressure of the control valve V becomes the property illustrated by a line (2) in FIG. 4.

In contrast to this, in the case where the contraction speed of the damper D is fast and the flow rate of discharge of the pump 4 falls below the amount of increased volume per unit time of the extension-side chamber R1, the liquid supply from the pump 4 does not catch up with the amount of increased volume per unit time of the extension-side chamber R1. When the liquid discharged from the pump 4 is all absorbed into the extension-side chamber R1, the liquid does not flow through the control valve V. At this time, the liquid by the amount becoming insufficient in the extension-side chamber R1 is supplied from the accumulator Acc via the discharge passage 6 and the suction passage 10 by opening the suction check valve 11. In such situation, while the pressure of the extension-side chamber R1 becomes approximately equal to the pressure of the accumulator Acc, the pressure of the contraction-side chamber R2 becomes higher than the pressure of the accumulator Acc by the amount of pressure loss by the contraction-side damping valve 17. Therefore, the damper D cannot produce the thrust in the direction of pressing down the piston 2 but produces the thrust in the opposite direction, that is, the direction of pressing up the piston 2. Thus, in the case where the thrust of pressing down the piston 2 is caused to be produced by the suspension device S1, when the damper D performs the contraction operation by the external force and the flow rate of discharge of the pump 4 becomes less than the amount of increased volume per unit time of the extension-side chamber R1, the thrust of pressing down the piston 2 cannot be produced. In such situation, the thrust of the damper D has a property illustrated by a line (3) in FIG. 4, regardless of the valve opening pressure of the control valve V. To maximize the valve opening pressure of the control valve V, with the flow rate of discharge of the pump 4 per unit time of the extension-side chamber R1 of equal to or more than the amount of increased volume, the property becomes the line (2) in FIG. 4, and with the flow rate of discharge of the pump 4 per unit time of the extension-side chamber R1 of less than the amount of increased volume, the property changes to the line (3) in FIG. 4.

Next, as the third case, the following describes case where the thrust of pressing up the piston 2 is produced by the suspension device S1 and the damper D performs the contraction operation by the external force. In this case, the direction of the thrust generated by the damper D is the direction of pressing up the piston 2, and therefore the liquid needs to be supplied to the contraction-side chamber R2. In this case, the switching valve 9 is switched to take the contraction-side supply position 9c to connect the contraction-side chamber R2 to the supply passage 5 and the extension-side chamber R1 is communicated with the accumulator Acc through the discharge passage 6.

While the damper D is in the contraction operation, the volume of the contraction-side chamber R2 reduces. Therefore, the liquid by the reduced amount is discharged from the contraction-side chamber R2 through the contraction-side damping valve 17, further passes through the supply passage 5 and the control valve V, and then flows to the accumulator Acc. It should be noted that since the supply-side check valve 12 is disposed in the supply passage 5, even when the pressure of the supply passage 5 becomes dynamically higher than the discharge pressure of the pump 4, the liquid does not flow adversely to the pump 4 side. Meanwhile, the liquid corresponding to the amount of enlarged volume is supplied from the accumulator Acc to the extension-side chamber R1 whose volume is increased via the discharge passage 6.

Since the pressure of the supply passage 5 is controlled to be the valve opening pressure of the control valve V by the control valve V, the pressure of the contraction-side chamber R2 becomes higher than the pressure of the supply passage 5 by the amount of pressure loss generated when the liquid discharged from the contraction-side chamber R2 passes through the contraction-side damping valve 17. Meanwhile, the pressure of the extension-side chamber R1 is equal to that of the accumulator Acc. Accordingly, the pressure of the contraction-side chamber R2 becomes higher than that of the extension-side chamber R1 by a value found by adding the pressure by the amount of pressure loss generated at the contraction-side damping valve 17 to the valve opening pressure of the control valve V, and the damper D produces the thrust to reduce the contraction. At this time, the property of the thrust of the damper D with the maximum valve opening pressure of the control valve V becomes the property illustrated by a line (4) in FIG. 4.

Furthermore, as the fourth case, the following describes case where the thrust of pressing up the piston 2 is produced by the suspension device S1 and the damper D performs the extension operation by the external force. In this case, the direction of the thrust generated by the damper D is the direction of pressing up the piston 2, and therefore the liquid needs to be supplied to the contraction-side chamber R2. Accordingly, in this case, the switching valve 9 is switched to take the contraction-side supply position 9c to connect the contraction-side chamber R2 to the supply passage 5 and the extension-side chamber R1 is communicated with the accumulator Acc through the discharge passage 6.

While the damper D is in the extension operation, the volume of contraction-side chamber R2 increases. In the case where the flow rate of discharge of the pump 4 is equal to or more than the amount of increased volume per unit time of the contraction-side chamber R2, the flow rate of discharge of the pump 4 is larger than the flow rate required for the contraction-side chamber R2. In this case, the liquid discharged from the pump 4 flows into the contraction-side chamber R2 through the contraction-side check valve 18, and the surplus liquid not absorbed into the contraction-side chamber R2 among the flow rate of discharge of the pump 4 flows to the accumulator Acc through the control valve V. Accordingly, the pressure of the contraction-side chamber R2 becomes equal to the pressure of the supply passage 5 and is controlled by the valve opening pressure of the control valve V. Meanwhile, from the extension-side chamber R1 whose volume is reduced, the liquid by the amount of reduced volume is discharged from the extension-side chamber R1 to the accumulator Acc via the extension-side damping valve 15 and the discharge passage 6. The pressure of the extension-side chamber R1 becomes higher than the pressure of the accumulator Acc by the amount of pressure loss generated when the liquid discharged from the extension-side chamber R1 passes through the extension-side damping valve 15. Accordingly, in such situation, although the pressure of the contraction-side chamber R2 becomes equal to the valve opening pressure of the control valve V, the pressure of the extension-side chamber R1 becomes higher than the pressure of the accumulator Acc by the amount of pressure loss by the extension-side damping valve 15. The larger the flow rate discharged from the extension-side chamber R1 is, the larger the pressure loss is by the amount. Accordingly, the pressure of the contraction-side chamber R2 becomes higher than that of the extension-side chamber R1 by a value found by subtracting the pressure by the amount of pressure loss, which is generated at the extension-side damping valve 15, from the differential pressure adjusted by the control valve V, and the damper D produces the thrust to assist the extension. At this time, the property of the thrust of the damper D with the maximum valve opening pressure of the control valve V becomes the property illustrated by a line (5) in FIG. 4.

In contrast to this, in the case where the extension speed of the damper D is fast and the flow rate of discharge of the pump 4 falls below the amount of increased volume per unit time of the contraction-side chamber R2, the liquid supply from the pump 4 does not catch up with the amount of increased volume per unit time of the contraction-side chamber R2. When the liquid discharged from the pump 4 is all absorbed into the contraction-side chamber R2, the liquid does not flow through the control valve V. At this time, the liquid by the amount becoming insufficient in the contraction-side chamber R2 is supplied from the accumulator Acc via the discharge passage 6 and the suction passage 10 by opening the suction check valve 11. In such situation, while the pressure of the contraction-side chamber R2 becomes approximately equal to the pressure of the accumulator Acc, the pressure of the extension-side chamber R1 becomes higher than the pressure of the accumulator Acc by the amount of pressure loss by the extension-side damping valve 15. Therefore, the damper D cannot produce the thrust in the direction of pressing up the piston 2 but produces the thrust in the opposite direction, that is, the direction of pressing down the piston 2. Thus, in the case where the thrust of pressing up the piston 2 is caused to be produced by the suspension device S 1, when the damper D performs the extension operation by the external force and the flow rate of discharge of the pump 4 becomes less than the amount of increased volume per unit time of the contraction-side chamber R2, the thrust of pressing up the piston 2 cannot be produced. In such situation, the thrust of the damper D has a property illustrated by a line (6) in FIG. 4, regardless of the valve opening pressure of the control valve V. To maximize the valve opening pressure of the control valve V, with the flow rate of discharge of the pump 4 per unit time of the contraction-side chamber R2 of equal to or more than the amount of increased volume, the property becomes the line (5) in FIG. 4, and with the flow rate of discharge of the pump 4 per unit time of the contraction-side chamber R2 of less than the amount of increased volume, the property changes to the line (6) in FIG. 4. It should be noted that the damper D exhibits the property of changing the thrust from the line (2) to the line (3) in FIG. 4 on the contraction side and exhibits the property of changing the thrust from the line (5) to the line (6) in FIG. 4 on the extension side. Such change in property occurs extremely instantaneously; therefore, an influence given to a ride comfort is slight.

As described above, by adjusting the valve opening pressure of the control valve V, the thrust of the damper D is configured to be variable in a range between a line connecting the line (1) to the line (3) and a line connecting the line (4) to the line (6) in FIG. 4. In the case where the driving of the pump 4 supplies the flow rate of discharge of the pump 4 to the chamber to be enlarged among the extension-side chamber R1 and the contraction-side chamber R2, when the flow rate of discharge of the pump 4 is equal to or more than the amount of increased volume of the enlarged chamber, the damper D can produce the thrust in a direction identical to the extension/contraction direction of the damper D.

Continuously, the following describes the operations of the suspension device S1 when the pump 4 is not driven (set to the stop state). In this case as well, four cases are assumed by categorizing the cases by the direction that the damper D receives the disturbance and extends/contracts and the direction that the damper D generates the thrust.

First, the following describes case where the thrust of pressing down the piston 2 is produced by the suspension device S1 and the damper D performs the extension operation by the external force. In this case, since the direction of the thrust generated by the damper D is the direction of pressing down the piston 2, the switching valve 9 is switched to take the extension-side supply position 9b to connect the extension-side chamber R1 to the supply passage 5 and the contraction-side chamber R2 is communicated with the accumulator Acc through the discharge passage 6.

While the damper D is in the extension operation, the volume of the extension-side chamber R1 reduces. Therefore, the liquid by the reduced amount is discharged from the extension-side chamber R1 through the extension-side damping valve 15, passes through the supply passage 5 and the control valve V, and then is flown to the accumulator Acc. It should be noted that since the supply-side check valve 12 is disposed, the liquid does not flow to the pump 4 side. Meanwhile, the liquid corresponding to the amount of enlarged volume is supplied from the accumulator Acc to the contraction-side chamber R2 whose volume is increased via the discharge passage 6.

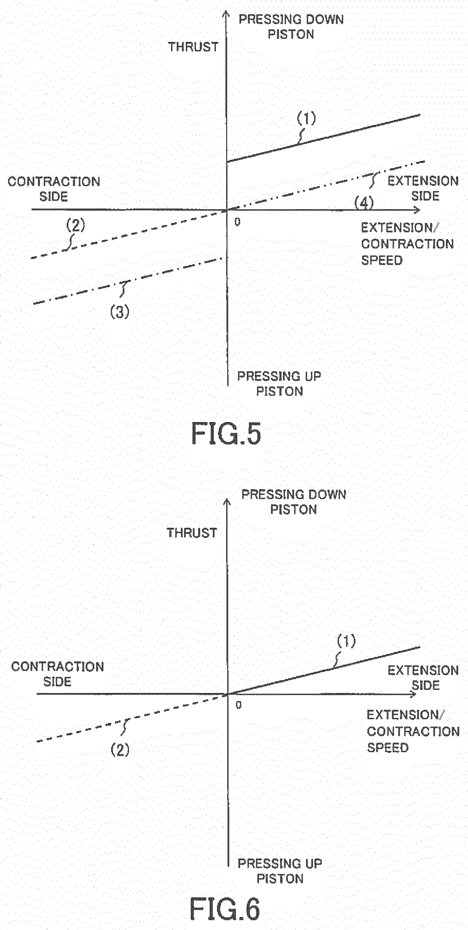

Since the pressure of the supply passage 5 is controlled to be the valve opening pressure of the control valve V with the control valve V, the pressure of the extension-side chamber R1 becomes higher than the pressure of the supply passage 5 by the amount of pressure loss generated when the liquid discharged from the extension-side chamber R1 passes through the extension-side damping valve 15. Accordingly, the pressure of the extension-side chamber R1 in this case becomes higher than the pressure of the contraction-side chamber R2 by the amount of the pressure found by superimposing the amount of pressure loss by the extension-side damping valve 15 on the valve opening pressure of the control valve V. At this time, the property of the thrust of the damper D with the maximum valve opening pressure of the control valve V becomes the property illustrated by a line (1) in FIG. 5. It should be noted that the graph illustrated in FIG. 5 indicates the thrust direction of the damper D on the vertical axis and indicates the extension/contraction speed of the damper D on the horizontal axis.

Subsequently, the following describes case where the thrust of pressing down the piston 2 is produced by the suspension device S1 and the damper D performs the contraction operation by the external force. In this case, while the pump 4 is in the stop state and therefore the pump 4 does not supply the liquid, the direction of the thrust generated by the damper D is the direction of pressing down the piston 2. Therefore, the switching valve 9 is switched to take the extension-side supply position 9b to connect the extension-side chamber R1 to the supply passage 5 and the contraction-side chamber R2 is communicated with the accumulator Acc through the discharge passage 6.

The volume of the extension-side chamber R1 increases while the damper D is in the contraction operation; however, since the pump 4 does not discharge the liquid, the liquid does not flow through the control valve V. The liquid by the amount becoming insufficient in the extension-side chamber R1 is supplied from the accumulator Acc via the discharge passage 6 and the suction passage 10 by opening the suction check valve 11. In such situation, the pressure of the extension-side chamber R1 becomes approximately equal to the pressure of the accumulator Acc. Meanwhile, from the contraction-side chamber R2 whose volume is reduced, the liquid by the amount of reduced volume is discharged from the contraction-side chamber R2 to the accumulator Acc via the contraction-side damping valve 17 and the discharge passage 6. The pressure of the contraction-side chamber R2 becomes higher than the pressure of the extension-side chamber R1 by the amount of pressure loss generated when the liquid discharged from the contraction-side chamber R2 passes through the contraction-side damping valve 17. Therefore, the damper D cannot produce the thrust in the direction of pressing down the piston 2 but produces the thrust in the opposite direction, that is, the direction of pressing up the piston 2. Thus, in the case where the pump 4 stops while the suspension device S1 is caused to produce the thrust of pressing down the piston 2 and the damper D performs the contraction operation by the external force, the thrust cannot be produced in the direction of pressing down the piston 2. Accordingly, the thrust of the damper D has a property illustrated by a line (2) in FIG. 5, regardless of the valve opening pressure of the control valve V. This brings an effect similar to controlling a contraction-side damping force to the lowest damping force in a damping force variable damper.

Next, the following describes case where the thrust of pressing up the piston 2 is produced by the suspension device S1 and the damper D performs the contraction operation by the external force. In this case, the direction of the thrust generated by the damper D is the direction of pressing up the piston 2. Therefore, the switching valve 9 is switched to take the contraction-side supply position 9c to connect the contraction-side chamber R2 to the supply passage 5 and the extension-side chamber R1 is communicated with the accumulator Acc through the discharge passage 6.

While the damper D is in the contraction operation, the volume of the contraction-side chamber R2 reduces. Therefore, the liquid by the reduced amount is discharged from the contraction-side chamber R2 through the contraction-side damping valve 17, passes through the supply passage 5 and the control valve V, and then is flown to the accumulator Acc. It should be noted that since the supply-side check valve 12 is disposed, the liquid does not flow to the pump 4 side. Meanwhile, the liquid corresponding to the amount of enlarged volume is supplied from the accumulator Acc to the extension-side chamber R1 whose volume is increased via the discharge passage 6.

Since the pressure of the supply passage 5 is controlled to be the valve opening pressure of the control valve V with the control valve V, the pressure of the contraction-side chamber R2 becomes higher than the pressure of the supply passage 5 by the amount of pressure loss generated when the liquid discharged from the contraction-side chamber R2 passes through the contraction-side damping valve 17. Accordingly, the pressure of the contraction-side chamber R2 in this case becomes higher than the pressure of the extension-side chamber R1 by the amount of the pressure found by superimposing the amount of pressure loss by the contraction-side damping valve 17 on the valve opening pressure of the control valve V. Accordingly, the property of the thrust of the damper D with the maximum valve opening pressure of the control valve V becomes the property illustrated by a line (3) in FIG. 5.

Subsequently, the following describes case where the thrust of pressing up the piston 2 is produced by the suspension device S1 and the damper D performs the extension operation by the external force. In this case, while the pump 4 is in the stop state and therefore the pump 4 does not supply the liquid, the direction of the thrust generated by the damper D is the direction of pressing up the piston 2. Therefore, the switching valve 9 is switched to take the contraction-side supply position 9c to connect the contraction-side chamber R2 to the supply passage 5 and the extension-side chamber R1 is communicated with the accumulator Acc through the discharge passage 6.

The volume of the contraction-side chamber R2 increases while the damper D is in the extension operation; however, since the pump 4 does not discharge the liquid, the liquid does not flow through the control valve V. The liquid by the amount becoming insufficient in the contraction-side chamber R2 is supplied from the accumulator Acc via the discharge passage 6 and the suction passage 10 by opening the suction check valve 11. In such situation, the pressure of the contraction-side chamber R2 becomes approximately equal to the pressure of the accumulator Acc. Meanwhile, from the extension-side chamber R1 whose volume is reduced, the liquid by the amount of reduced volume is discharged from the extension-side chamber R1 to the accumulator Acc via the extension-side damping valve 15 and the discharge passage 6. The pressure of the extension-side chamber R1 becomes higher than the pressure of the accumulator Acc by the amount of pressure loss generated when the liquid discharged from the extension-side chamber R1 passes through the extension-side damping valve 15. Therefore, the damper D cannot produce the thrust in the direction of pressing up the piston 2 but produces the thrust in the opposite direction, that is, the direction of pressing down the piston 2. Thus, in the case where the pump 4 stops while the suspension device S1 is caused to produce the thrust of pressing up the piston 2 and the damper D performs the extension operation by the external force, the thrust cannot be produced in the direction of pressing up the piston 2. Accordingly, the thrust of the damper D has a property illustrated by a line (4) in FIG. 5, regardless of the valve opening pressure of the control valve V. This brings an effect similar to controlling an extension-side damping force to the lowest damping force in the damping force variable damper.

Thus, while the pump 4 is in stop, adjusting the valve opening pressure of the control valve V ensures making the thrust of the damper D variable in a range from the line (4) to line (1) in a first quadrant in FIG. 5 and in a range from the line (2) to the line (3) in a third quadrant.

Here, in a semi-active suspension, the case where the skyhook control is performed in accordance with a Karnopp rule using the damping force variable damper is considered. When the extension-side damping force (the force in the direction of pressing down the piston) is required, the damping force of the damping force variable damper is controlled so as to be the damping force at which the target thrust is obtained during the extension operation. While in the contraction operation, since the extension-side damping force is not obtained, the damping force is controlled such that the lowest damping force is produced to the contraction side. Meanwhile, when the contraction-side damping force (the force in the direction of pressing up the piston) is required, the damping force of the damping force variable damper is controlled so as to be the damping force at which the target thrust is obtained during the contraction operation. While in the extension operation, since the contraction-side damping force is not obtained, the damping force is controlled such that the lowest damping force is produced to the extension side. With the suspension device S1, to cause the damper D to produce the thrust of pressing down the piston 2 with the pump 4 stopped, the thrust of the damper D is controlled in a range in which the thrust can be output by the switching valve 9 during the extension and the damper D produces the lowest thrust during the contraction. On the contrary, with the suspension device S1, to cause the damper D to produce the thrust of pressing up the piston 2 with the pump 4 stopped, the thrust of the damper D is controlled in a range in which the thrust can be output by the control valve V during the contraction and the damper D produces the lowest thrust during the extension. Accordingly, with the pump 4 stopped, the suspension device S1 of this embodiment can automatically produce the function identical to the semi-active suspension. Accordingly, even during the driving of the pump 4, when the flow rate of discharge of the pump 4 becomes less than the amount of increased volume of the extension-side chamber R1 or the contraction-side chamber R2 to be enlarged, the suspension device S1 automatically can function as the semi-active suspension.

Finally, the following describes the operation of the suspension device S1 in failure where the current application to the motor 13, the switching valve 9, and the control valve V of the suspension device S1 becomes incapable due to some sort of abnormally. Suh failure includes, for example, in addition to the case where the current application to the motor 13, the switching valve 9, and the control valve V becomes incapable, the case where the current application to the motor 13, the switching valve 9, and the control valve V is stopped due to abnormally of the controller C and the driver Dr.

In the failure, the current application to the motor 13, the switching valve 9, and the control valve V is stopped or the current application becomes incapable. At this time, the pump 4 stops, the valve opening pressure of the control valve V is minimized, and the switching valve 9 is biased by the spring 9d and takes the extension-side supply position 9b.

While the damper D performs the extension operation by the external force in this state, the volume of the extension-side chamber R1 reduces. Therefore, the liquid by the reduced amount is discharged from the extension-side chamber R1 through the extension-side damping valve 15, passes through the control valve V via the supply passage 5, and then is flown to the accumulator Acc. It should be noted that since the supply-side check valve 12 is disposed, the liquid does not flow to the pump 4 side. Meanwhile, the liquid corresponding to the amount of enlarged volume is supplied from the accumulator Acc to the contraction-side chamber R2 whose volume is increased via the discharge passage 6.

While the liquid discharged from the extension-side chamber R1 passes through the control valve V, the control valve V has the property of hardly providing the resistance to the flow passing through during the non-current application; therefore, the pressure of the supply passage 5 becomes approximately identical to the pressure of the accumulator Acc. Accordingly, since the pressure of the extension-side chamber R1 becomes higher than the pressure of the supply passage 5 by the amount of pressure loss generated when the liquid discharged from the extension-side chamber R1 passes through the extension-side damping valve 15, the pressure becomes higher than the pressure of the contraction-side chamber R2 by this amount of pressure loss. Accordingly, the property of the thrust of the damper D becomes the property illustrated by a line (1) in FIG. 6 in the graph illustrated in FIG. 6.

On the contrary, in the case where the damper D performs the contraction operation by the external force, since the volume of the contraction-side chamber R2 reduces, the liquid by the reduced amount is discharged from the contraction-side chamber R2 through the contraction-side damping valve 17 and flows to the accumulator Acc. Meanwhile, the liquid corresponding to the amount of enlarged volume is supplied from the accumulator Acc via the discharge passage 6 and through the suction passage 10 and the suction check valve 11 to the extension-side chamber R1 whose volume is increased. It should be noted that since the supply-side check valve 12 is disposed, the liquid does not flow to the pump 4 side. Accordingly, the pressure of the contraction-side chamber R2 becomes higher than the pressure of the extension-side chamber R1 by the amount of pressure loss generated when the liquid discharged from the contraction-side chamber R2 passes through the contraction-side damping valve 17. Accordingly, the property of the thrust of the damper D becomes a property illustrated by a line (2) in FIG. 6.

Thus, in the case where the suspension device S1 is in failure, the damper D can function as the passive damper and reduces the vibrations of the sprung member B and the unsprung member W; therefore, a fail-safe behavior is surely performed in the failure. It should be noted that even if the switching valve 9 takes the contraction-side supply position 9c in the failure, the property illustrated in FIG. 6 can be achieved, ensuring performing the fail-safe behavior.

Thus, the suspension device S1 of this embodiment can also function as the semi-active suspension not only can function as the active suspension that actively extends/contracts the damper D. Additionally, in the situation where the suspension device S1 is expected to produce the thrust as the semi-active suspension, the driving of the pump 4 is not essential and the pump 4 only needs to be driven only when the driving is necessary, reducing energy consumption. Accordingly, the suspension device S1 according to this embodiment can function as the active suspension and also features small energy consumption.

In the case where the control valve V has the property of small pressure override relative to the flow rate, since the pressure acting on the pump 4 decreases, an amount of energy consumed by pump 4 also decreases, thereby ensuring further effectively reducing the energy consumption.

Furthermore, in the case where the suspension device S1 is in failure, the damper D functions as the passive damper and reduces the vibrations of the sprung member B and the unsprung member W; therefore, the fail-safe behavior is surely performed in the failure.

The suspension device S1 according to the embodiment includes the extension-side damping valve 15, the extension-side check valve 16, the contraction-side damping valve 17, and the contraction-side check valve 18. The extension-side damping valve 15 has an extension-side damping element for providing a resistance to the flow heading for the switching valve 9 as switching means from the extension-side chamber R1. The extension-side check valve 16 is disposed in parallel with the extension-side damping valve 15 and allows only the flow heading for the extension-side chamber R1 from the switching valve 9. The contraction-side damping valve 17 has a contraction-side damping element for providing a resistance to the flow heading for the switching valve 9 from the contraction-side chamber R2. The contraction-side check valve 18 is disposed in parallel with the contraction-side damping valve 17 and allows only the flow heading for the contraction-side chamber R2 from the switching valve 9. Accordingly, to supply the liquid from the pump 4 to the extension-side chamber R1 or the contraction-side chamber R2, the liquid can be supplied to the extension-side chamber R1 or the contraction-side chamber R2 via the extension-side check valve 16 or the contraction-side check valve 18 of little resistance. This allows reducing a load of the pump 4 when the extension/contraction direction of the damper D matches the direction of the generated thrust. In the case where the liquid is discharged from the extension-side chamber R1 or the contraction-side chamber R2, the extension-side damping valve 15 or the contraction-side damping valve 17 can provide the resistance to the flow of passing liquid, making it possible to obtain the large thrust by setting the pressure of the extension-side chamber R1 or the contraction-side chamber R2 to be equal to or more than the valve opening pressure of the control valve V. Accordingly, even when the thrust of the solenoid 20c in the control valve V is decreased, the suspension device S1 can generate the large thrust. Thus, the control valve V can be downsized and the cost can be reduced. It should be noted that the extension-side damping valve 15 and the contraction-side damping valve 17 may allow the bidirectional flow, and in such case, the extension-side check valve 16 and the contraction-side check valve 18 can be omitted. In this case as well, since the driving of the pump 4 is not essential in the situation where the suspension device S1 is expected to produce the thrust as the semi-active suspension, the energy consumption decreases.

To feed the liquid to the suspension device S1 thus configured, it is only necessary that the liquid is fed to the reservoir R, the pump 4 is driven, and the liquid discharged from the pump 4 is delivered to the extension-side chamber R1 in the damper D via the hydraulic pressure circuit FC1. When the liquid is thus fed and the damper D contracts the most, the liquid cannot be fed into the damper D any further. In view of this, the surplus liquid is guided to the accumulator Acc via the hydraulic pressure circuit FC1 and the inside of the accumulator Acc is filled with the liquid. When an upstream pressure of the relief valve Re reaches the relief pressure, the liquid is refluxed to the reservoir R. Basically, the inside of the damper D, the inside of the hydraulic pressure circuit FC1, and the inside of the accumulator Acc are thus filled with the liquid. Stopping the pump 4 pressurizes the inside of the damper D and the inside of the hydraulic pressure circuit FC1 to a pressure equal to the relief pressure of the relief valve Re by the accumulator Acc. It should be noted that in the case where air remains in the damper D, while the extension-side chamber R1 and the contraction-side chamber R2 are sequentially connected to the accumulator Acc side via the hydraulic pressure circuit FC1, the damper D is caused to run in full stroke. Doing so discharges the air remained in the damper D from the inside of the damper D and blows off the air to the reservoir R via the relief valve Re. Accordingly, with the suspension device S1 according to the embodiment, feeding the liquid to the reservoir R and driving the pump 4 allow the feed of liquid to the suspension device S. This eliminates the need for the dedicated device and ensures the easy feed of liquid. Additionally, since the inside of the damper D and the inside of the hydraulic pressure circuit FC1 are pressurized to the pressure equal to the relief pressure of the relief valve Re by the accumulator Acc, a system internal pressure requested by the suspension device S1 is compensated, eliminating the need for pressurized feed liquid. Accordingly, the suspension device S1 according to this embodiment allows the easy feed of liquid without the use of the dedicated device.

### <Second Embodiment>

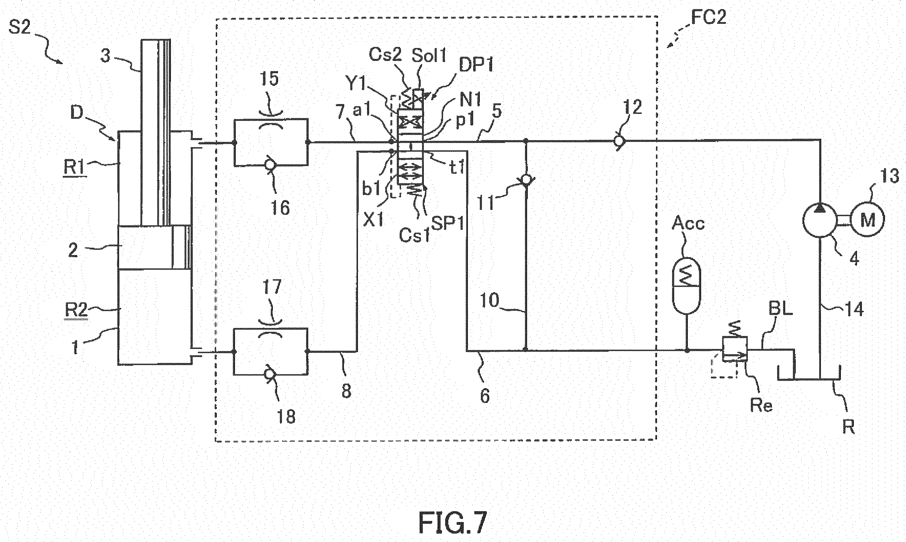

The following describes a suspension device according to the second embodiment (another exemplary configuration) including a specific hydraulic pressure circuit. A suspension device S2 according to the second embodiment includes a hydraulic pressure circuit FC2 illustrated in FIG. 7.

As illustrated in FIG. 7, the hydraulic pressure circuit FC2 differs from the hydraulic pressure circuit FC1, which controls the pressures of the extension-side chamber R1 and the contraction-side chamber R2 by the control valve V and the switching valve 9, in that a differential pressure control valve DP1 with four ports and three positions is provided between the supply passage 5, the discharge passage 6, the extension-side passage 7, and the contraction-side passage 8. Specifically, the hydraulic pressure circuit FC2 includes the differential pressure control valve DP1 at the position where the switching valve 9 is disposed instead of dispensing with the control passage 19, the control valve V, and the switching valve 9 in the hydraulic pressure circuit FC1. Other configurations of the hydraulic pressure circuit FC2 are similar to those of the hydraulic pressure circuit FC1 and therefore the identical reference numerals are assigned for the identical members for avoiding the overlapped explanations and omitting the detailed explanation.

The differential pressure control valve DP1 is an electromagnetic differential pressure control valve with four ports and three positions that includes four ports, an A-port a1 connected to the extension-side passage 7, a B-port b1 connected to the contraction-side passage 8, a P-port p1 connected to the supply passage 5, and a T-port t1 connected to the discharge passage 6 to control the differential pressure between the extension-side passage 7 and the contraction-side passage 8.

Specifically, the differential pressure control valve DP1 includes a spool SP1, a pair of springs Cs1 and Cs2, and a push-pull solenoid Sol1. The spool SP1 is switched between three positions, an extension-side supply position X1 where the extension-side passage 7 communicates with the supply passage 5 and the contraction-side passage 8 communicates with the discharge passage 6, a neutral position N1 where all ports a1, b1, p1, and t1 communicate with one another to mutually communicate between the supply passage 5, the discharge passage 6, the extension-side passage 7, and the contraction-side passage 8, and a contraction-side supply position Y1 where the extension-side passage 7 communicates with the discharge passage 6 and the contraction-side passage 8 communicates with the supply passage 5. The spool SP1 is sandwiched from both sides by the pair of springs Cs1 and Cs2 to be biased. The solenoid Sol1 drives the spool SP1. When the spool SP1 does not receive the thrust from the solenoid Sol1, the spool SP1 is positioned at the neutral position N1 by the biasing force from the springs Cs1 and Cs2. It should be noted that the extension-side supply position X1, the neutral position N1, and the contraction-side supply position Y1 are continuously switched by the movement of the spool SP1.

The differential pressure control valve DP1 guides the pressure from the extension-side passage 7 to one end side of the spool SP1 as a pilot pressure such that the pressure from the extension-side passage 7 can bias the spool SP1 downward in FIG. 7. Furthermore, the differential pressure control valve DP1 guides the pressure from the contraction-side passage 8 to the other end side of the spool SP1 as a pilot pressure such that the pressure from the contraction-side passage 8 can bias the spool SP1 upward in FIG. 7. The force of pressing the spool SP1 downward in FIG. 7 by the pressure from the extension-side passage 7 and the force of pressing the spool SP1 upward in FIG. 7 by the pressure from the contraction-side passage 8 are forces that press the spool SP1 to the opposite to one another, and a resultant force of these forces is used as a hydraulic pressure feedback force.

Current application to the solenoid Sol1 switches the spool SP1 to a position at which the thrust from the solenoid Sol1, the hydraulic pressure feedback force by the pressures from the extension-side passage 7 and the contraction-side passage 8, and the biasing force from the springs Cs1 and Cs2 are balanced among the positions X1 and Y1. The magnitude of the thrust of the solenoid Sol1 changes the position of the spool SP1 at which this thrust, the hydraulic pressure feedback force, and the biasing force from the springs Cs1 and Cs2 are balanced; therefore, adjusting the thrust of the solenoid Sol1 can control the differential pressure between the extension-side passage 7 and the contraction-side passage 8. Meanwhile, during the non-current application during which the electric power is not supplied to the solenoid Sol1, the spool SP1 is biased by the springs Cs1 and Cs2 and takes the neutral position N1.

Accordingly, the adjustment of the amount of current supplied to the solenoid Sol1 allows controlling the differential pressure between the pressure of the extension-side passage 7 and the pressure of the contraction-side passage 8. It should be noted that when the damper D receives the disturbance and extends/contracts, the liquid comes in and out the extension-side chamber R1 and the contraction-side chamber R2 of the damper D; therefore, the flow rate passing through the differential pressure control valve DP1 increases and decreases from the flow rate of the pump by the amount of flow rate caused by the extension/contraction of the damper D. Thus, even when the extension/contraction of the damper D increases and decreases the flow rate, the hydraulic pressure feedback force automatically moves the spool SP1 and the differential pressure is controlled to be a differential pressure uniquely settled by the amount of current supplied to the solenoid Sol1.

It should be noted that the differential pressure between the pressure of the extension-side passage 7 and the pressure of the contraction-side passage 8 can be appropriately controlled when the pressure on the high pressure side is held higher than the accumulator pressure. In the case where the flow rate of the pump becomes insufficient or the pump 4 is in stop and therefore the liquid needs to be suppled from the accumulator Acc via the suction check valve 11, the differential pressure becomes 0.

The suspension device S2 is configured as described above. Subsequently, the following describes the operations. First, the following describes the operations during normal where the motor 13, the pump 4, and the differential pressure control valve DP1 behave normally.

Basically, when the motor 13 drives the pump 4 and the differential pressure control valve DP1 controls the differential pressure between the extension-side chamber R1 and the contraction-side chamber R2, the damper D can function as the actuator that actively extends or contracts. In the case where the thrust generated by the damper D is in the extension direction of the damper D, the differential pressure control valve DP1 is switched to the contraction-side supply position Y1 to connect the contraction-side chamber R2 to the supply passage 5 and connect the extension-side chamber R1 to the accumulator Acc. On the contrary, in the case where the thrust generated by the damper D is in the contraction direction of the damper D, the differential pressure control valve DP1 is switched to the extension-side supply position X1 to connect the extension-side chamber R1 to the supply passage 5 and connect the contraction-side chamber R2 to the accumulator Acc. At this time, adjusting the differential pressure between the extension-side chamber R1 and the contraction-side chamber R2 by the differential pressure control valve DP1 ensures controlling the magnitude of the thrust of the damper D in the extension direction or the contraction direction.

The operation to actively extend/contract the damper D has been described above. The damper D receives the disturbance by the unevenness on the road surface during the vehicle running and extends/contracts, and therefore the following describes the operation in the light of the damper D extending/ contracting by receiving the disturbance.

When the damper D receives the disturbance and extends/contracts, four cases are assumed by categorizing the cases by the direction that the damper D generates the thrust and the direction that the damper D extends/contracts. Defining the pressure at the A-port a1 as Pa and a pressure at the B-port b1 as Pb, the following describes the first case where the pressure is controlled so as to meet Pa > Pb, the suspension device S2 is caused to produce the thrust of pressing down the piston 2, and the damper D performs the extension operation by the external force. In this case, the extension of the damper D reduces the volume of the extension-side chamber R1 and the liquid discharged from the extension-side chamber R1 passes through the extension-side damping valve 15 and flows to the A-port a1 of the differential pressure control valve DP1. Meanwhile, the extension of the damper D expands the volume of the contraction-side chamber R2 and the liquid is supplemented to the contraction-side chamber R2 from the pump 4 through the supply passage 5, the B-port b1, and the contraction-side check valve 18.

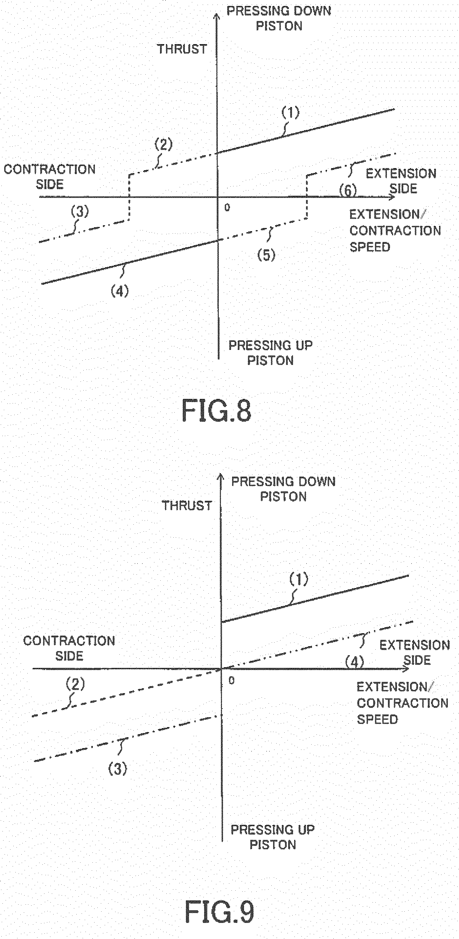

When the extension speed becomes fast and the flow rate of liquid to be supplemented to the contraction-side chamber R2 exceeds the flow rate of discharge of the pump 4, the liquid is also supplied from the accumulator Acc via the suction check valve 11. At this time, since the differential pressure control valve DP1 holds the differential pressure between the pressure Pa at the A-port a1 and the pressure Pb at the B-port b1 constant, the pressure of the extension-side chamber R1 becomes higher than the pressure at the A-port a1 by the amount of pressure loss generated at the extension-side damping valve 15. Accordingly, the pressure of the extension-side chamber R1 becomes higher than that of the contraction-side chamber R2 by a value found by adding the pressure by the amount of pressure loss generated at the extension-side damping valve 15 to the differential pressure adjusted by the differential pressure control valve DP1, and the damper D produces the thrust to reduce the extension. The properties of the extension/contraction speed of the damper and the produced thrust at this time become the properties illustrated by a line (1) in FIG. 8. It should be noted that the graph illustrated in FIG. 8 indicates the thrust of the damper D on the vertical axis and indicates the extension/contraction speed of the damper D on the horizontal axis.

The following describes the second case where the pressure is controlled so as to meet Pa > Pb, the suspension device S2 is caused to produce the thrust of pressing down the piston 2, and the damper D performs the contraction operation by the external force. In this case, the contraction of the damper D reduces the volume of the contraction-side chamber R2 and the liquid discharged from the contraction-side chamber R2 passes through the contraction-side damping valve 17 and flows to the B-port b1 of the differential pressure control valve DP1. Meanwhile, the contraction of the damper D expands the volume of the extension-side chamber R1 and the liquid is supplemented to the extension-side chamber R1 from the pump 4 through the supply passage 5, the A-port a1, and the extension-side check valve 16. Since the differential pressure control valve DP1 holds the differential pressure between the pressure Pa at the A-port a1 and the pressure Pb at the B-port b1 constant, the pressure of the contraction-side chamber R2 becomes higher than the pressure at the B-port b1 by the amount of pressure loss generated at the contraction-side damping valve 17. Accordingly, the pressure of the extension-side chamber R1 becomes higher than that of the contraction-side chamber R2 by a value found by subtracting the pressure by the amount of pressure loss generated at the contraction-side damping valve 17 from the differential pressure adjusted by the differential pressure control valve DP1, and the damper D produces the thrust to assist the contraction. The properties of the extension/contraction speed of the damper and the produced thrust at this time become the properties illustrated by a line (2) in FIG. 8.

Furthermore, when the contraction speed becomes fast and the flow rate of liquid to be supplemented to the extension-side chamber R1 exceeds the flow rate of discharge of the pump 4, the liquid is also supplied from the accumulator Acc via the suction check valve 11. The A-port a1 cannot be pressurized by the flow rate of discharge of the pump 4 in such state, and the pressure Pa at the A-port a1 becomes slightly lower than the pressure of the accumulator Acc. Then, the differential pressure control valve DP1 cannot control the differential pressure between the pressure Pa at the A-port a1, and the pressure Pb at the B-port b1 and the differential pressure between both becomes 0. Then, the damper D produces the thrust by the differential pressure between the extension-side chamber R1 and the contraction-side chamber R2 generated by the pressure loss generated when the liquid discharged from the contraction-side chamber R2 passes through the contraction-side damping valve 17. The properties of the extension/contraction speed of the damper and the produced thrust at this time become the properties illustrated by a line (3) in FIG. 8, becoming discontinuous with the property illustrated by the line (2). Thus, when the flow rate of liquid to be supplemented to the extension-side chamber R1 exceeds the flow rate of discharge of the pump 4, the damper D functions as the passive damper and has the property where the thrust changes dependent on the contraction speed.

Next, the following describes the third case where the pressure is controlled so as to meet Pb > Pa, the suspension device S2 is caused to produce the thrust of pressing up the piston 2, and the damper D performs the contraction operation by the external force. In this case, the contraction of the damper D reduces the volume of the contraction-side chamber R2, the liquid discharged from the contraction-side chamber R2 passes through the contraction-side damping valve 17 and flows to the B-port b1 of the differential pressure control valve DP1. Meanwhile, the contraction of the damper D expands the volume of the extension-side chamber R1 and the liquid is supplemented to the extension-side chamber R1 from the pump 4 through the supply passage 5, the A-port a1, and the extension-side check valve 16.

When the contraction speed becomes fast and the flow rate of liquid to be supplemented to the extension-side chamber R1 exceeds the flow rate of discharge of the pump 4, the liquid is also supplied from the accumulator Acc via the suction check valve 11. Since the differential pressure control valve DP1 holds the differential pressure between the pressure Pa at the A-port a1 and the pressure Pb at the B-port b1 constant, the pressure of the contraction-side chamber R2 becomes higher than the pressure at the B-port b1 by the amount of pressure loss generated at the contraction-side damping valve 17. Accordingly, the pressure of the contraction-side chamber R2 becomes higher than that of the extension-side chamber R1 by a value found by adding the pressure by the amount of pressure loss generated at the contraction-side damping valve 17 to the differential pressure adjusted by the differential pressure control valve DP1, and the damper D produces the thrust to reduce the contraction. The properties of the extension/ contraction speed of the damper and the produced thrust at this time become the properties illustrated by a line (4) in FIG. 8.

The following describes the fourth case where the pressure is controlled so as to meet Pb > Pa, the suspension device S2 is caused to produce the thrust of pressing up the piston 2, and the damper D performs the extension operation by the external force. The extension of the damper D reduces the volume of the extension-side chamber R1 and the liquid discharged from the extension-side chamber R1 passes through the extension-side damping valve 15 and flows to the A-port a1 of the differential pressure control valve DP1. Meanwhile, the extension of the damper D expands the volume of the contraction-side chamber R2 and the liquid is supplemented to the contraction-side chamber R2 from the pump 4 through the supply passage 5, the B-port b1, and the contraction-side check valve 18. Since the differential pressure control valve DP1 holds the differential pressure between the pressure Pa at the A-port a1 and the pressure Pb at the B-port b1 constant, the pressure of the extension-side chamber R1 becomes higher than the pressure at the A-port a1 by the amount of pressure loss generated at the extension-side damping valve 15. Accordingly, the pressure of the contraction-side chamber R2 becomes higher than that of the extension-side chamber R1 by a value found by subtracting the pressure by the amount of pressure loss generated at the extension-side damping valve 15 from the differential pressure adjusted by the differential pressure control valve DP1, and the damper D produces the thrust to assist the extension. The properties of the extension/contraction speed of the damper and the produced thrust at this time become the properties illustrated by a line (5) in FIG. 8.

Furthermore, when the extension speed becomes fast and the flow rate of liquid to be supplemented to the contraction-side chamber R2 exceeds the flow rate of discharge of the pump 4, the liquid is also supplied from the accumulator Acc via the suction check valve 11. The B-port b1 cannot be pressurized by the flow rate of discharge of the pump 4 in such state, and the pressure Pb at the B-port b1 becomes slightly lower than the pressure of the accumulator Acc. Then, the differential pressure control valve DP1 cannot control the differential pressure between the pressure Pa at the A-port a1, and the pressure Pb at the B-port b1 and the differential pressure between both becomes 0. Then, the damper D produces the thrust by the differential pressure between the extension-side chamber R1 and the contraction-side chamber R2 generated by the pressure loss generated when the liquid discharged from the extension-side chamber R1 passes through the extension-side damping valve 15. The properties of the extension/contraction speed of the damper and the produced thrust at this time become the properties illustrated by a line (6) in FIG. 8, becoming discontinuous with the property illustrated by the line (5). Thus, when the flow rate of liquid to be supplemented to the contraction-side chamber R2 exceeds the flow rate of discharge of the pump 4, the damper D functions as the passive damper and has the property where the thrust changes dependent on the extension speed.

It should be noted that the damper D exhibits the property of changing the thrust from the line (2) to the line (3) in FIG. 8 on the contraction side and exhibits the property of changing the thrust from the line (5) to the line (6) in FIG. 8 on the extension side. Such change in property occurs extremely instantaneously; therefore, an influence given to a ride comfort is slight.

As described above, by controlling the differential pressure by the differential pressure control valve DP1, the suspension device S2 can configure the thrust of the damper D variable in a range between a line connecting the line (1) to the line (3) and a line connecting the line (4) to the line (6) in FIG. 8. In the case where the driving of the pump 4 supplies the flow rate of discharge of the pump 4 to the chamber to be enlarged among the extension-side chamber R1 and the contraction-side chamber R2, when the flow rate of discharge of the pump 4 is equal to or more than the amount of increased volume of the enlarged chamber, the damper D can produce the thrust in a direction identical to the extension/contraction direction of the damper D.

Continuously, the following describes the operations of the suspension device S2 when the pump 4 is not driven (set to the stop state). In this case as well, four cases are assumed by categorizing the cases by the direction that the damper D receives the disturbance and extends/contracts and the direction that the damper D generates the thrust.

The following describes the first case where the pressure is controlled so as to meet Pa > Pb, the suspension device S2 is caused to produce the thrust of pressing down the piston 2, and the damper D performs the extension operation by the external force. In this case, the extension of the damper D reduces the volume of the extension-side chamber R1 and the liquid discharged from the extension-side chamber R1 passes through the extension-side damping valve 15 and flows to the A-port a1 of the differential pressure control valve DP1. Meanwhile, the extension of the damper D expands the volume of the contraction-side chamber R2 and the liquid is supplemented to the contraction-side chamber R2 from the accumulator Acc through the B-port b1 and the contraction-side check valve 18.

Since the differential pressure control valve DP1 holds the differential pressure between the pressure Pa at the A-port a1 and the pressure Pb at the B-port b1 constant, the pressure of the extension-side chamber R1 becomes higher than the pressure at the A-port a1 by the amount of pressure loss generated at the extension-side damping valve 15. Accordingly, the pressure of the extension-side chamber R1 becomes higher than that of the contraction-side chamber R2 by a value found by adding the pressure by the amount of pressure loss generated at the extension-side damping valve 15 to the differential pressure adjusted by the differential pressure control valve DP1, and the damper D produces the thrust to reduce the extension. The properties of the extension/contraction speed of the damper and the produced thrust at this time become the properties illustrated by a line (1) in FIG. 9. It should be noted that the graph illustrated in FIG. 9 indicates the thrust of the damper D on the vertical axis and indicates the extension/contraction speed of the damper D on the horizontal axis.

The following describes the second case where the pressure is controlled so as to meet Pa > Pb, the suspension device S2 is caused to produce the thrust of pressing down the piston 2, and the damper D performs the contraction operation by the external force. In this case, the contraction of the damper D reduces the volume of the contraction-side chamber R2 and the liquid discharged from the contraction-side chamber R2 passes through the contraction-side damping valve 17 and flows to the B-port b1 of the differential pressure control valve DP1. Meanwhile, the contraction of the damper D expands the volume of the extension-side chamber R1 and the liquid is supplemented to the extension-side chamber R1 from the accumulator Acc through the suction check valve 11, the A-port a1, and the extension-side check valve 16. At this time, the pressure Pa at the A-port a1 becomes slightly lower than the pressure of the accumulator Acc. Then, the differential pressure control valve DP1 cannot control the differential pressure between the pressure Pa at the A-port a1 and the pressure Pb at the B-port b1, and the differential pressure between both becomes 0. Then, the damper D produces the thrust by the differential pressure between the extension-side chamber R1 and the contraction-side chamber R2 generated by the pressure loss generated when the liquid discharged from the contraction-side chamber R2 passes through the contraction-side damping valve 17. The properties of the extension/contraction speed of the damper and the produced thrust at this time become the properties illustrated by a line (2) in FIG. 9.

Next, the following describes the third case where the pressure is controlled so as to meet Pb > Pa, the suspension device S2 is caused to produce the thrust of pressing up the piston 2, and the damper D performs the contraction operation by the external force. The contraction of the damper D reduces the volume of the contraction-side chamber R2 and the liquid discharged from the contraction-side chamber R2 passes through the contraction-side damping valve 17 and flows to the B-port b1 of the differential pressure control valve DP1. Meanwhile, the contraction of the damper D expands the volume of the extension-side chamber R1 and the liquid is supplemented to the extension-side chamber R1 from the accumulator Acc through the A-port a1 and the extension-side check valve 16.

Since the differential pressure control valve DP1 holds the differential pressure between the pressure Pa at the A-port a1 and the pressure Pb at the B-port b1 constant, the pressure of the contraction-side chamber R2 becomes higher than the pressure at the B-port b1 by the amount of pressure loss generated at the contraction-side damping valve 17. Accordingly, the pressure of the contraction-side chamber R2 becomes higher than that of the extension-side chamber R1 by a value found by adding the pressure by the amount of pressure loss generated at the contraction-side damping valve 17 to the differential pressure adjusted by the differential pressure control valve DP1, and the damper D produces the thrust to reduce the contraction. The properties of the extension/contraction speed of the damper and the produced thrust at this time become the properties illustrated by a line (3) in FIG. 9.

The following describes the fourth case where the pressure is controlled so as to meet Pb > Pa, the suspension device S2 is caused to produce the thrust of pressing up the piston 2, and the damper D performs the extension operation by the external force. In this case, the extension of the damper D reduces the volume of the extension-side chamber R1 and the liquid discharged from the extension-side chamber R1 passes through the extension-side damping valve 15 and flows to the A-port a1 of the differential pressure control valve DP1. Meanwhile, the extension of the damper D expands the volume of the contraction-side chamber R2 and the liquid is supplemented to the contraction-side chamber R2 from the accumulator Acc through the suction check valve 11, the B-port b1, and the contraction-side check valve 18. The pressure Pb at the B-port b1 becomes slightly lower than the pressure of the accumulator Acc. Then, the differential pressure control valve DP1 cannot control the differential pressure between the pressure Pa at the A-port a1 and the pressure Pb at the B-port b1, and the differential pressure between both becomes 0. Then, the damper D produces the thrust by the differential pressure between the extension-side chamber R1 and the contraction-side chamber R2 generated by the pressure loss generated when the liquid discharged from the extension-side chamber R1 passes through the extension-side damping valve 15. The properties of the extension/contraction speed of the damper and the produced thrust at this time become the properties illustrated by a line (4) in FIG. 9.

Accordingly, with the pump 4 in stop, controlling the differential pressure by the differential pressure control valve DP1 can make the thrust of the damper D variable in a range from the line (1) to the line (4) in a first quadrant and in a range from the line (3) to the line (2) in a third quadrant in FIG. 9.

With the pump 4 in stop, in the case where the suspension device S2 is caused to produce the thrust of pressing down the piston 2, when the damper D performs the contraction operation by the external force, the thrust of the damper D becomes the property illustrated by the line (2) in FIG. 9 regardless of the regulation of differential pressure by the differential pressure control valve DP1. This brings an effect similar to controlling the contraction-side damping force to the lowest damping force in the damping force variable damper. Furthermore, with the pump 4 in stop, in the case where the suspension device S2 is caused to produce the thrust of pressing up the piston 2, when the damper D performs the extension operation by the external force, the thrust of the damper D becomes the property illustrated by the line (4) in FIG. 9 regardless of the regulation of differential pressure by the differential pressure control valve DP1. This brings an effect similar to controlling the extension-side damping force to the lowest damping force in the damping force variable damper.

With the suspension device S2 according to this embodiment, to cause the damper D to produce the thrust of pressing down the piston 2 with the pump 4 stopped, the thrust of the damper D is controlled in a range in which the thrust can be output by the differential pressure control valve DP1 during the extension and the damper D produces the lowest thrust during the contraction. On the contrary, with the suspension device S2 according to the embodiment, to cause the damper D to produce the thrust of pressing up the piston 2 with the pump 4 stopped, the thrust of the damper D is controlled in a range in which the thrust can be output by the differential pressure control valve DP1 during the contraction and the damper D produces the lowest thrust during the extension. Accordingly, with the pump 4 stopped, the suspension device S2 can automatically produce the function identical to the semi-active suspension. Accordingly, even during the driving of the pump 4, when the flow rate of discharge of the pump 4 becomes less than the amount of increased volume of the extension-side chamber R1 or the contraction-side chamber R2 to be enlarged, the suspension device S2 automatically can function as the semi-active suspension.

Finally, the following describes the operation of the suspension device S2 in failure where the current application to the motor 13 and the differential pressure control valve DP1 becomes incapable due to some sort of abnormally. Suh failure includes, for example, in addition to the incapability of the current application to the motor 13 and the differential pressure control valve DP1, the stop of current application to the motor 13 and the differential pressure control valve DP1 due to abnormally of the controller C and the driver Dr.

In the failure, the current application to the motor 13 and the differential pressure control valve DP1 is stopped or the current application becomes incapable. This stops the pump 4 and biases the differential pressure control valve DP1 by the springs Cs1 and Cs2, and the differential pressure control valve DP1 takes the neutral position N1.

While the damper D performs the extension operation by the external force in this state, the volume of the extension-side chamber R1 reduces; therefore, the liquid by the reduced amount is discharged from the extension-side chamber R1 through the extension-side damping valve 15. The liquid is supplemented from the extension-side chamber R1 and the accumulator Acc to the contraction-side chamber R2 whose volume is expanded.

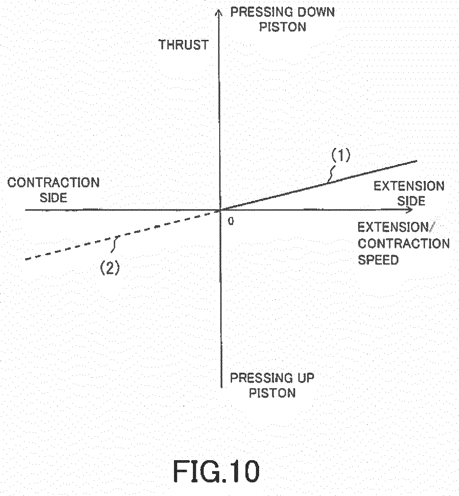

Accordingly, the pressure of the extension-side chamber R1 becomes higher than the pressure of the contraction-side chamber R2 by the amount of pressure loss generated when the liquid discharged from the extension-side chamber R1 passes through the extension-side damping valve 15 and the damper D produces the thrust by the differential pressure between the extension-side chamber R1 and the contraction-side chamber R2. The properties of the extension/contraction speed of the damper and the produced thrust at this time become the properties illustrated by a line (1) in FIG. 10.

On the contrary, in the case where the damper D performs the contraction operation by the external force, since the volume of the contraction-side chamber R2 reduces, the liquid by the reduced amount is discharged from the contraction-side chamber R2 through the contraction-side damping valve 17. The liquid is supplemented from the contraction-side chamber R2 and the accumulator Acc to the extension-side chamber R1 whose volume is expanded.

Accordingly, the pressure of the contraction-side chamber R2 becomes higher than the pressure of the extension-side chamber R1 by the amount of pressure loss generated when the liquid discharged from the contraction-side chamber R2 passes through the contraction-side damping valve 17 and the damper D produces the thrust by the differential pressure between the extension-side chamber R1 and the contraction-side chamber R2. The properties of the extension/contraction speed of the damper and the produced thrust at this time become the properties illustrated by a line (2) in FIG. 10.

Thus, in the case where the suspension device S2 is in failure, the damper D functions as the passive damper and reduces the vibrations of the sprung member B and the unsprung member W; therefore, the fail-safe behavior is surely performed in the failure.

Thus, the suspension device S2 can function as the active suspension that actively extends/contracts the damper D. Furthermore, in the situation where the suspension device S2 is expected to produce the thrust as the semi-active suspension, the driving of the pump 4 is not essential and the pump 4 only needs to be driven as necessary, reducing energy consumption. Accordingly, the suspension device S2 according to this embodiment can function as the active suspension and also features small energy consumption.

With the suspension device S2 according to this embodiment, the thrust of the damper D can be controlled by only the differential pressure control valve DP1. Accordingly, compared with the suspension device S1 according to the first embodiment requiring the two solenoid valves, a cost for the entire device becomes inexpensive and routing of pipes of the hydraulic pressure circuit can also be simplified.

Furthermore, this suspension device S2 not only can function as the active suspension but also can perform the fail-safe behavior in the failure by only disposing the one differential pressure control valve DP1 to which the solenoid is mounted.

To feed the liquid to the suspension device S2 thus configured, it is only necessary that the liquid is fed to the reservoir R, the pump 4 is driven, and the liquid discharged from the pump 4 is delivered to the extension-side chamber R1 in the damper D via the hydraulic pressure circuit FC2. When the liquid is thus fed and the damper D contracts the most, the liquid cannot be fed into the damper D any further. In view of this, the surplus liquid is guided to the accumulator Acc via the hydraulic pressure circuit FC2 and the inside of the accumulator Acc is filled with the liquid. When an upstream pressure of the relief valve Re reaches the relief pressure, the liquid is refluxed to the reservoir R. Basically, the inside of the damper D, the inside of the hydraulic pressure circuit FC2, and the inside of the accumulator Acc are filled with the liquid as described above. Stopping the pump 4 pressurizes the inside of the damper D and the inside of the hydraulic pressure circuit FC2 to a pressure equal to the relief pressure of the relief valve Re by the accumulator Acc. It should be noted that in the case where air remains in the damper D, while the extension-side chamber R1 and the contraction-side chamber R2 are sequentially connected to the accumulator Acc side via the hydraulic pressure circuit FC2, the damper D is caused to run in full stroke. Doing so discharges the air remained in the damper D from the inside of the damper D and blows off the air to the reservoir R via the relief valve Re. Accordingly, with the suspension device S2 according to the embodiment, feeding the liquid to the reservoir R and driving the pump 4 allow the feed of liquid to the suspension device S2. This eliminates the need for the dedicated device and ensures the easy feed of liquid. Additionally, since the inside of the damper D and the inside of the hydraulic pressure circuit FC2 are pressurized to the pressure equal to the relief pressure of the relief valve Re by the accumulator Acc, a system internal pressure requested by the suspension device S2 is compensated, eliminating the need for pressurized feed liquid. Accordingly, the suspension device S2 according to this embodiment allows easily feed of liquid without the use of the dedicated device.

The suspension device S2 according to the embodiment includes the extension-side damping valve 15, the extension-side check valve 16, the contraction-side damping valve 17, and the contraction-side check valve 18. The extension-side damping valve 15 provides a resistance to the flow heading for the differential pressure control valve DP1 from the extension-side chamber R1. The extension-side check valve 16 is disposed in parallel with the extension-side damping valve 15 and allows only the flow heading for the extension-side chamber R1 from the differential pressure control valve DP1. The contraction-side damping valve 17 provides a resistance to the flow heading for the differential pressure control valve DP1 from the contraction-side chamber R2. The contraction-side check valve 18 is disposed in parallel with the contraction-side damping valve 17 and allows only the flow heading for the contraction-side chamber R2 from the differential pressure control valve DP1. Accordingly, to supply the liquid from the pump 4 to the extension-side chamber R1 or the contraction-side chamber R2, the liquid can be supplied to the extension-side chamber R1 or the contraction-side chamber R2 via the extension-side check valve 16 or the contraction-side check valve 18 of little resistance. This allows reducing a load of the pump 4 when the extension/contraction direction of the damper D matches the direction of the thrust to be generated. In the case where the liquid is discharged from the extension-side chamber R1 or the contraction-side chamber R2, the extension-side damping valve 15 or the contraction-side damping valve 17 can provide the resistance to the flow of passing liquid, making it possible to obtain the large thrust by setting the differential pressure between the extension-side chamber R1 and the contraction-side chamber R2 to be equal to or more than the differential pressure settable by the differential pressure control valve DP1. Even when the thrust of the solenoid Sol1 in the differential pressure control valve DP1 is decreased, the suspension device S2 can generate the large thrust. Thus, the differential pressure control valve DP1 can be downsized and the cost can be further reduced. It should be noted that the extension-side damping valve 15 and the contraction-side damping valve 17 may provide the resistance to the flow of liquid regardless of the direction of the flow of liquid. As long as the extension-side damping valve 15 and the contraction-side damping valve 17 allow the bidirectional flow, the extension-side check valve 16 and the contraction-side check valve 18 can be omitted.

### <Third Embodiment>

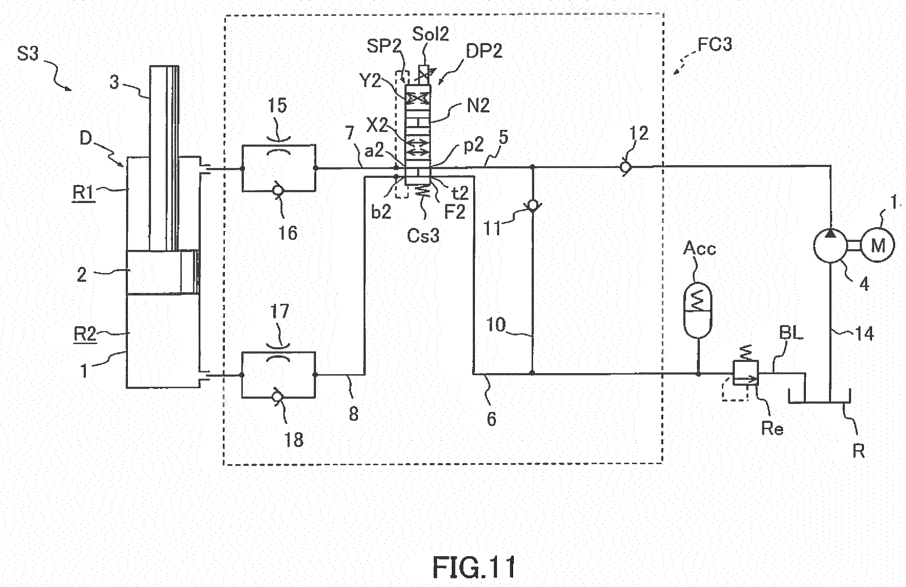

The following describes a suspension device according to the third embodiment (another exemplary configuration) including a specific hydraulic pressure circuit. A suspension device S3 according to the third embodiment includes a hydraulic pressure circuit FC3 illustrated in FIG. 11.

As illustrated in FIG. 11, the hydraulic pressure circuit FC3 differs from the hydraulic pressure circuit FC2 in that the differential pressure control valve DP1 of the hydraulic pressure circuit FC2 is configured as a differential pressure control valve DP2 with four ports and four positions. Other configurations of the hydraulic pressure circuit FC3 are similar to those of the hydraulic pressure circuit FC2 and therefore the identical reference numerals are assigned for the identical members for omitting the detailed explanation.

The differential pressure control valve DP2 includes four ports, an A-port a2 connected to the extension-side passage 7, a B-port b2 connected to the contraction-side passage 8, a P-port p2 connected to the supply passage 5, and a T-port t2 connected to the discharge passage 6. The differential pressure control valve DP2 is configured as an electromagnetic differential pressure control valve with four ports and four positions that controls the differential pressure between the A-port a2 and the B-port b2 and communicates between the mutual extension-side passage 7, contraction-side passage 8, supply passage 5, and discharge passage 6, and takes a fail position during the non-current application.

Specifically, the differential pressure control valve DP2 includes a spool SP2, a spring Cs3, and a solenoid Sol2. The spool SP2 is switched between four positions, an extension-side supply position X2 where the A-port a2 communicates with the P-port p2 and the B-port b2 communicates with the T-port t2, a neutral position N2 where all ports of the A-port a2, the B-port b2, the P-port p2, and the T-port t2 are communicated with one another, a contraction-side supply position Y2 where the A-port a2 communicates with the T-port t2 and the B-port b2 communicates with the P-port p2, and a fail position F2 where all ports are communicated with one another. The spring Cs3 biases the spool SP2. The solenoid Sol2 provides the thrust against the spring Cs3 to the spool SP2. That is, at the extension-side supply position X2, the supply passage 5 is communicated with the extension-side passage 7 and the discharge passage 6 is communicated with the contraction-side passage 8. At the neutral position N2 and the fail position F2, the supply passage 5, the discharge passage 6, the extension-side passage 7, and the contraction-side passage 8 are communicated with one another. At the contraction-side supply position Y2, the supply passage 5 is communicated with the contraction-side passage 8 and the discharge passage 6 is communicated with the extension-side passage 7. It should be noted that the extension-side supply position X2, the neutral position N2, and the contraction-side supply position Y2 are continuously switched by the movement of the spool SP2.

A pressure from the extension-side passage 7 is guided to one end side of the spool SP2 as a pilot pressure such that the pressure from the extension-side passage 7 can bias the spool SP2 downward in FIG. 11. Furthermore, a pressure from the contraction-side passage 8 is guided to the other end side of the spool SP2 as a pilot pressure such that the pressure from the contraction-side passage 8 can bias the spool SP2 upward in FIG. 11. The force of pressing the spool SP2 downward in FIG. 11 by the pressure from the extension-side passage 7 and the force of pressing the spool SP2 upward in FIG. 11 by the pressure from the contraction-side passage 8 are forces that press the spool SP2 to the opposite to one another, and a resultant force of these forces is used as a hydraulic pressure feedback force.

Current application to the solenoid Sol2 switches the spool SP2 to a position at which the thrust from the solenoid Sol2, the hydraulic pressure feedback force by the pressures from the extension-side passage 7 and the contraction-side passage 8, and the biasing force from the spring Cs are balanced among the positions X2, Y2, and N2. The magnitude of the thrust of the solenoid Sol changes the position of the spool SP2 at which this thrust, the hydraulic pressure feedback force, and the biasing force from the spring Cs3 are balanced; therefore, adjusting the thrust of the solenoid Sol2 can control the differential pressure between the extension-side passage 7 and the contraction-side passage 8. Meanwhile, during the non-current application during which the electric power is not supplied to the solenoid Sol2, the spool SP2 is pressed by the spring Cs3 and takes the fail position F2. It should be noted that while this embodiment connects the extension-side passage 7 to the A-port a2 and connects the contraction-side passage 8 to the B-port b2, the extension-side passage 7 may be connected to the B-port b2 and the contraction-side passage 8 may be connected to the A-port a2.

Accordingly, the adjustment of the amount of current supplied to the solenoid Sol2 allows controlling the differential pressure between the pressure of the extension-side passage 7 and the pressure of the contraction-side passage 8. It should be noted that when the damper D receives the disturbance and extends/contracts, the liquid comes in and out the extension-side chamber R1 and the contraction-side chamber R2 of the damper D; therefore, the flow rate passing through the differential pressure control valve DP2 increases and decreases from the flow rate of the pump by the amount of flow rate caused by the extension/contraction of the damper D. Thus, even when the extension/contraction of the damper D increases and decreases the flow rate, the hydraulic pressure feedback force automatically moves the spool SP2 and the differential pressure is controlled to be a differential pressure uniquely settled by the amount of current supplied to the solenoid Sol2.

It should be noted that the differential pressure between the pressure of the extension-side passage 7 and the pressure of the contraction-side passage 8 can be appropriately controlled when the pressure on the high pressure side is held higher than the accumulator pressure. In the case where the flow rate of the pump becomes insufficient or the pump 4 is in stop and therefore the liquid needs to be suppled from the accumulator Acc via the suction check valve 11, the differential pressure becomes 0.

The suspension device S3 is configured as described above. Similar to the suspension device S2 including the hydraulic pressure circuit FC2, the suspension device S3 can control the thrust of the damper D by the differential pressure control valve DP2. Accordingly, similar to the suspension device S2, this suspension device S3 drives the pump 4 by the motor 13 and controls the differential pressure between the extension-side chamber R1 and the contraction-side chamber R2 by the differential pressure control valve DP2. Thus, the suspension device S3 can function as the actuator that actively extends or contracts the damper D. In the case where the thrust generated by the damper D is in the extension direction of the damper D, the differential pressure control valve DP2 is set to the contraction-side supply position Y2 to connect the contraction-side chamber R2 to the supply passage 5 and to connect the extension-side chamber R1 to the accumulator Acc. On the contrary, in the case where the thrust generated in the damper D is in the contraction direction of the damper D, the differential pressure control valve DP2 is set to the extension-side supply position X2 to connect the extension-side chamber R1 to the supply passage 5 and to connect the contraction-side chamber R2 to the accumulator Acc. Then, adjusting the differential pressure between the extension-side chamber R1 and the contraction-side chamber R2 by the differential pressure control valve DP2 ensures controlling the magnitude of the thrust of the damper D in the extension direction or the contraction direction.

During vehicle running, the suspension device S3 also performs the operation similar to that of the suspension device S2 regarding the operation when the damper D receives the disturbance by the unevenness on the road surface and extends/contracts. That is, the property of the thrust relative to the extension/contraction speed of the damper D in the suspension device S3 becomes the property from the line (1) to line (6) in FIG. 8, similar to that of the suspension device S2. Accordingly, with the suspension device S3 as well, the thrust of the damper D can be variable in a range between the line connecting the line (1) to the line (3) and the line connecting the line (4) to the line (6). In the case where the driving of the pump 4 supplies the flow rate of discharge of the pump 4 to the chamber to be enlarged among the extension-side chamber R1 and the contraction-side chamber R2, when the flow rate of discharge of the pump 4 is equal to or more than an amount of increased volume of the enlarged chamber, the damper D can produce the thrust in a direction identical to the extension/contraction direction of the damper D.

Furthermore, the suspension device S3 also performs the operation similar to the suspension device S2 regarding the operation when the pump 4 is in the stop state where the pump 4 is not driven. That is, the property of the thrust relative to the extension/contraction speed of the damper D in the suspension device S3 becomes the property from the line (1) to line (4) in FIG. 9, similar to that of the suspension device S2. Accordingly, with the suspension device S3 as well, with the pump 4 in stop, controlling the differential pressure by the differential pressure control valve DP2 can make the thrust of the damper D variable in the range from the line (1) to the line (4) in the first quadrant in FIG. 9 and in the range from the line (3) to the line (2) in the third quadrant.

It should be noted that the differential pressure control valve DP2 in the hydraulic pressure circuit FC3 of the suspension device S3 includes the fail position F2 in addition to the neutral position N2 different from the differential pressure control valve DP1 in the hydraulic pressure circuit FC2. At this fail position F2, the supply passage 5, the discharge passage 6, the extension-side passage 7, and the contraction-side passage 8 are communicated with one another similar to the neutral position N in the differential pressure control valve DP1. Accordingly, even in the failure, the suspension device S3 performs the operation similar to that of the suspension device S2. That is, the property of the thrust relative to the extension/contraction speed of the damper D in the suspension device S3 becomes the property illustrated by the line (1) and the line (2) in FIG. 10, similar to that of the suspension device S2. Thus, even with the suspension device S3 in the failure, the damper D is caused to function as the passive damper and reduces the vibrations of the sprung member B and the unsprung member W; therefore, the fail-safe behavior is surely performed.

Thus, the suspension device S3 according to the embodiment can not only function as the active suspension that actively extends/contracts the damper D but also, in the situation where the suspension device S3 is expected to produce the thrust as the semi-active suspension, the driving of the pump 4 is not essential and the pump 4 only needs to be driven as necessary, reducing energy consumption. Accordingly, the suspension device S3 according to the present invention can function as the active suspension and also features small energy consumption.

With the suspension device S3 according to this embodiment, the thrust of the damper D can be controlled by only the differential pressure control valve DP2. Accordingly, compared with the suspension device S1 requiring the two solenoid valves, a cost for the entire device becomes inexpensive and also routing of pipes of a fluid pressure circuit can also be simplified.

Furthermore, this suspension device S3 not only can function as the active suspension but also can perform the fail-safe behavior in the failure by only disposing the one differential pressure control valve DP2 to which the solenoid is mounted.

To feed the liquid to the suspension device S3 thus configured, it is only necessary that the liquid is fed to the reservoir R, the pump 4 is driven, and the liquid discharged from the pump 4 is delivered to the extension-side chamber R1 in the damper D via a hydraulic pressure circuit FC3. When the liquid is thus fed and the damper D contracts the most, the liquid cannot be fed into the damper D any further. In view of this, the surplus liquid is guided to the accumulator Acc via the hydraulic pressure circuit FC3 and the inside of the accumulator Acc is filled with the liquid. When an upstream pressure of the relief valve Re reaches the relief pressure, the liquid is refluxed to the reservoir R. Basically, the inside of the damper D, the inside of the hydraulic pressure circuit FC3, and the inside of the accumulator Acc are filled with the liquid as described above. Stopping the pump 4 pressurizes the inside of the damper D and the inside of the hydraulic pressure circuit FC3 to a pressure equal to the relief pressure of the relief valve Re by the accumulator Acc. It should be noted that in the case where air remains in the damper D, while the extension-side chamber R1 and the contraction-side chamber R2 are sequentially connected to the accumulator Acc side via the hydraulic pressure circuit FC3, the damper D is caused to run in full stroke. Doing so discharges the air remained in the damper D from the inside of the damper D and blows off the air to the reservoir R via the relief valve Re. Accordingly, with the suspension device S3 according to the embodiment, feeding the liquid to the reservoir R and driving the pump 4 allow the feed of liquid to the suspension device S3. This eliminates the need for the dedicated device and ensures the easy feed. Additionally, since the inside of the damper D and the inside of the hydraulic pressure circuit FC3 are pressurized to the pressure equal to the relief pressure of the relief valve Re by the accumulator Acc, a system internal pressure requested by the suspension device S3 is compensated, eliminating the need for pressurized feed liquid. Accordingly, the suspension device S3 according to this embodiment allows easily feed of liquid without the use of the dedicated device.

Additionally, the driver Dr to drive the differential pressure control valve DP2 also only needs to include the driving circuit the drives the solenoid Sol. Compared with a conventional suspension device requiring two solenoid valves, a count of driving circuits owned by the driver Dr becomes small. This also reduces the cost of the driver Dr to drive the suspension device S3.

The suspension device S3 according to the embodiment includes the extension-side damping valve 15, the extension-side check valve 16, the contraction-side damping valve 17, and the contraction-side check valve 18. The extension-side damping valve 15 provides a resistance to the flow heading for the differential pressure control valve DP2 from the extension-side chamber R1. The extension-side check valve 16 is disposed in parallel with the extension-side damping valve 15 and allows only the flow heading for the extension-side chamber R1 from the differential pressure control valve DP2. The contraction-side damping valve 17 provides a resistance to the flow heading for the differential pressure control valve DP2 from the contraction-side chamber R2. The contraction-side check valve 18 is disposed in parallel with the contraction-side damping valve 17 and allows only the flow heading for the contraction-side chamber R2 from the differential pressure control valve DP2. Accordingly, to supply a fluid from the pump 4 to the extension-side chamber R1 or the contraction-side chamber R2, the fluid can be supplied to the extension-side chamber R1 or the contraction-side chamber R2 via the extension-side check valve 16 or the contraction-side check valve 18 of little resistance. This allows reducing a load of the pump 4 when the extension/contraction direction of the damper D matches the direction of the thrust to be generated. In the case where the fluid is discharged from the extension-side chamber R1 or the contraction-side chamber R2, the extension-side damping valve 15 or the contraction-side damping valve 17 can provide the resistance to the flow of passing fluid, making it possible to obtain the large thrust by setting the differential pressure between the extension-side chamber R1 and the contraction-side chamber R2 to be equal to or more than the differential pressure settable by the differential pressure control valve DP2. Even when the thrust of the solenoid Sol in the differential pressure control valve DP2 is decreased, the suspension device S3 can generate the large thrust. Thus, the differential pressure control valve DP2 can be downsized and the cost can be further reduced. It should be noted that the extension-side damping valve 15 or the contraction-side damping valve 17 may provide the resistance to the flow of fluid regardless of the direction of the flow of fluid. As long as the extension-side damping valve 15 and the contraction-side damping valve 17 allow the bidirectional flow, the extension-side check valve 16 and the contraction-side check valve 18 can be omitted.

The following describes the configurations, the actions, and the effects according to the embodiments of the present invention configured as described above as a whole.

The suspension device S, S1, S2, or S3 includes the damper D, the pump 4, the accumulator Acc, the hydraulic pressure circuit FC, FC1, FC2, or FC3, the reservoir R, the blow flow passage BL, and the relief valve Re. The damper D includes the cylinder 1 and the piston 2. The piston 2 is movably inserted into the cylinder 1 to partition the inside of the cylinder 1 into the extension-side chamber R1 and the contraction-side chamber R2. The hydraulic pressure circuit FC, FC1, FC2, or FC3 is disposed between the pump 4 and the accumulator Acc, and the damper D configured to adjust the thrust of the damper D. The reservoir R is connected to the suction side of the pump 4. The blow flow passage BL connects the accumulator Acc to the reservoir R. The relief valve Re is disposed in the blow flow passage BL. When the relief valve Re reaches the relief pressure, the relief valve Re opens to allow the flow from the accumulator Acc side to the reservoir R side.

With this configuration, feeding the liquid to the reservoir R and driving the pump 4 fill the inside of the damper D, the inside of the hydraulic pressure circuit FC, FC1, FC2, or FC3, and the inside of the accumulator Acc with the liquid. The inside of the damper D and the inside of the hydraulic pressure circuit FC, FC1, FC2, or FC3 are pressurized to the pressure equal to the relief pressure of the relief valve Re by the accumulator Acc. This allows easily feed of liquid without the use of the dedicated device.

In the suspension device S1, the hydraulic pressure circuit FC1 includes the supply passage 5 connected to the discharge side of the pump 4, the discharge passage 6 connected to the accumulator Acc, the extension-side passage 7 connected to the extension-side chamber R1, the contraction-side passage 8 connected to the contraction-side chamber R2, the extension-side damping valve 15 disposed in the extension-side passage 7, the contraction-side damping valve 17 disposed in the contraction-side passage 8, the switching valve 9, which selectively connects one of the extension-side passage 7 and the contraction-side passage 8 to the supply passage 5 and connects the other of the extension-side passage 7 and the contraction-side passage 8 to the discharge passage 6, the control valve V, which can adjust the pressure of the supply passage 5 according to the supplied current, the suction passage 10, which connects the supply passage 5 to the discharge passage 6, the suction check valve 11, which is disposed in the suction passage 10 and allows only the flow of liquid heading for the supply passage 5 from the discharge passage 6, and the supply-side check valve 12, which is disposed between the control valve V and the pump 4 at the supply passage 5 and allows only the flow heading for the control valve V side from the pump 4 side.

With this configuration, the suspension device S1 can not only function as the active suspension but also function as the semi-active suspension. Additionally, in the situation where the suspension device S1 is expected to produce the thrust as the semi-active suspension, the driving of the pump 4 is not essential and the pump 4 only needs to be driven as necessary, reducing energy consumption. Furthermore, in the case where the suspension device S1 is in failure, the damper D functions as the passive damper and the fail-safe behavior is surely performed.

With the suspension device S2 or S3, the hydraulic pressure circuit FC2 or FC3 includes the supply passage 5 connected to the discharge side of the pump 4, the discharge passage 6 connected to the accumulator Acc, the extension-side passage 7 connected to the extension-side chamber R1, the contraction-side passage 8 connected to the contraction-side chamber R2, the extension-side damping valve 15 disposed in the extension-side passage 7, the contraction-side damping valve 17 disposed in the contraction-side passage 8, the differential pressure control valve DP1 or DP2 disposed between the supply passage 5, the discharge passage 6, the extension-side passage 7, and the contraction-side passage 8 to control the differential pressure between the extension-side passage 7 and the contraction-side passage 8, the supply-side check valve 12, which is disposed between the differential pressure control valve DP1 or DP2 and the pump 4 at the supply passage 5 and allows only the flow heading for the differential pressure control valve DP1 or DP2 side from the pump 4 side, the suction passage 10, which connects the discharge passage 6 to the supply passage 5 at a point between the differential pressure control valve DP1 or DP2 and the supply-side check valve 12, and the suction check valve 11, which is disposed in the suction passage 10 and allows only the flow of liquid heading for the supply passage 5 from the discharge passage 6.

With this configuration, only the one differential pressure control valve DP1 or DP2 can not only function as the active suspension but also can function as the semi-active suspension. Furthermore, in the situation where the suspension device S2 or S3 is expected to produce the thrust as the semi-active suspension, the driving of the pump 4 is not essential and the pump 4 only needs to be driven as necessary, reducing energy consumption. Furthermore, in the case where the suspension device S2 or S3 is in failure, the damper D functions as the passive damper and the fail-safe behavior is surely performed.

With the suspension device S2, the differential pressure control valve DP1 includes the spool SP1, the push-pull solenoid Sol1, and the pair of springs Cs1 and Cs2. The spool SP1 is switched between the three positions, the extension-side supply position X1 where the extension-side passage 7 is connected to the supply passage 5 and the contraction-side passage 8 is connected to the discharge passage 6, the neutral position N1 where the extension-side passage 7, the contraction-side passage 8, the supply passage 5, and the discharge passage 6 communicate with one another, and the contraction-side supply position Y1 where the contraction-side passage 8 is connected to the supply passage 5 and the extension-side passage 7 is connected to the discharge passage 6. The solenoid Sol1 drives the spool SP1. The pair of springs Cs1 and Cs2 bias the spool SP1 to position the spool SP1 at the neutral position N1.

With this configuration, the differential pressure control valve DP1 is positioned at the neutral position N1 by the pair of springs Cs1 and Cs2 in the failure, and the supply passage, the discharge passage, the extension-side passage, and the contraction-side passage communicate with one another; therefore, the fail-safe behavior is surely performed in the failure.

With the suspension device S3, the differential pressure control valve DP2 includes the spool SP2, the solenoid Sol2, and the spring Cs3. The spool SP2 is switched between the four positions, the solenoid Sol2, the extension-side supply position X2 where the extension-side passage 7 is connected to the supply passage 5 and the contraction-side passage 8 is connected to the discharge passage 6, the neutral position N2 where the extension-side passage 7, the contraction-side passage 8, the supply passage 5, and the discharge passage 6 communicate with one another, the contraction-side supply position Y2 where the contraction-side passage 8 is connected to the supply passage 5 and the extension-side passage 7 is connected to the discharge passage 6, and the fail position F2 where the extension-side passage 7, the contraction-side passage 8, the supply passage 5, and the discharge passage 6 communicate with one another. The solenoid Sol2 drives the spool SP2. The spring Cs3 biases the spool SP2 to position the spool SP2 at the fail position F2 during the non-current application of the solenoid Sol2.

With this configuration, the differential pressure control valve DP2 is positioned at the fail position F2 by the spring Cs3 in the failure, and the supply passage 5, the discharge passage 6, the extension-side passage 7, and the contraction-side passage 8 communicate with one another; therefore, the fail-safe behavior is surely performed in the failure.

Furthermore, the hydraulic pressure circuit includes the extension-side check valve disposed in parallel with the extension-side damping valve and the contraction-side check valve disposed in parallel with the contraction-side damping valve. Accordingly, to supply the fluid from the pump to the extension-side chamber or the contraction-side chamber, the fluid can be supplied to the extension-side chamber or the contraction-side chamber via the extension-side check valve or the contraction-side check valve of little resistance. This allows reducing a load of the pump when the extension/contraction direction of the damper matches the direction of the thrust to be generated. In the case where the fluid is discharged from the extension-side chamber or the contraction-side chamber, the extension-side damping valve or the contraction-side damping valve provides the resistance to the flow of passing fluid, making it possible to obtain the large thrust by setting the differential pressure between the extension-side chamber and the contraction-side chamber to be equal to or more than the differential pressure settable by the differential pressure control valve. Even when the thrust of the solenoid in the differential pressure control valve is decreased, the suspension device can generate the large thrust. Thus, the differential pressure control valve can be downsized and the cost can be further reduced.

With the suspension device S1, the hydraulic pressure circuit FC1 includes the extension-side check valve 16, which is disposed in the extension-side passage 7 in parallel with the extension-side damping valve 15 and allows only the flow heading for the extension-side chamber R1 from the switching valve 9, and the contraction-side check valve 18, which is disposed in the contraction-side passage 8 in parallel with the contraction-side damping valve 17 and allows only the flow heading for the contraction-side chamber R2 from the switching valve 9.

With the suspension device S2 or S3, the hydraulic pressure circuit FC2 or FC3 includes the extension-side check valve 16, which is disposed in the extension-side passage 7 in parallel with the extension-side damping valve 15 and allows only the flow heading for the extension-side chamber R1 from the differential pressure control valve DP1 or DP2 and the contraction-side check valve 18, which is disposed in the contraction-side passage 8 in parallel with the contraction-side damping valve 17 and allows only the flow heading for the contraction-side chamber R2 from the differential pressure control valve DP1 or DP2.

Embodiments of this invention were described above, but the above embodiments are merely examples of applications of this invention, and the technical scope of this invention is not limited to the specific constitutions of the above embodiments.

This application claims priority based on Japanese Patent Application No.2015-193144 filed with the Japan Patent Office on September 30, 2015, the entire contents of which are incorporated into this specification.

## Claims

1. A suspension device comprising:
a damper that includes a cylinder and a piston, the piston being movably inserted into the cylinder to partition an inside of the cylinder into an extension-side chamber and a contraction-side chamber;
a pump;
an accumulator;
a hydraulic pressure circuit disposed between the pump, the accumulator, and the damper, the hydraulic pressure circuit being configured to adjust a thrust of the damper;
a reservoir connected to a suction side of the pump;
a blow flow passage that connects the accumulator to the reservoir; and
a relief valve disposed in the blow flow passage, the relief valve being configured to open when the relief valve reaches a relief pressure to allow a flow from the accumulator side to the reservoir side.

2. The suspension device according to claim 1, wherein
the hydraulic pressure circuit includes:
a supply passage connected to a discharge side of the pump;
a discharge passage connected to the accumulator;
an extension-side passage connected to the extension-side chamber;
a contraction-side passage connected to the contraction-side chamber;
an extension-side damping valve disposed in the extension-side passage;
a contraction-side damping valve disposed in the contraction-side passage;
a switching valve that selectively connects one of the extension-side passage and the contraction-side passage to the supply passage, the switching valve connecting the other of the extension-side passage and the contraction-side passage to the discharge passage;
a control valve configured to adjust a pressure of the supply passage according to a supplied current;
a suction passage that connects the supply passage to the discharge passage;
a suction check valve disposed in the suction passage, the suction check valve being configured to allow only a flow of liquid heading for the supply passage from the discharge passage; and
a supply-side check valve disposed between the control valve and the pump at the supply passage, the supply-side check valve being configured to allow only a flow heading for the control valve side from the pump side.

3. The suspension device according to claim 1, wherein
the hydraulic pressure circuit includes:
a supply passage connected to a discharge side of the pump;
a discharge passage connected to the accumulator;
an extension-side passage connected to the extension-side chamber;
a contraction-side passage connected to the contraction-side chamber;
an extension-side damping valve disposed in the extension-side passage;
a contraction-side damping valve disposed in the contraction-side passage;
a differential pressure control valve disposed between the supply passage, the discharge passage, the extension-side passage, and the contraction-side passage, the differential pressure control valve being configured to control a differential pressure between the extension-side passage and the contraction-side passage;
a supply-side check valve disposed between the differential pressure control valve and the pump in the supply passage, the supply-side check valve being configured to allow only a flow heading for the differential pressure control valve side from the pump side;
a suction passage that couples the discharge passage to the supply passage at a point between the differential pressure control valve and the supply-side check valve; and
a suction check valve disposed in the suction passage, the suction check valve being configured to allow only a flow of liquid heading for the supply passage from the discharge passage.

4. The suspension device according to claim 3, wherein
the differential pressure control valve includes:
a spool switched between three positions, the positions being an extension-side supply position, a neutral position, and a contraction-side supply position, the extension-side supply position being a position at which the extension-side passage is connected to the supply passage and the contraction-side passage is connected to the discharge passage, the neutral position being a position at which the extension-side passage, the contraction-side passage, the supply passage, and the discharge passage communicate with one another, the contraction-side supply position being a position at which the contraction-side passage is connected to the supply passage and the extension-side passage is connected to the discharge passage;
a push-pull solenoid that drives the spool; and
a pair of springs that bias the spool to position the spool at the neutral position.

5. The suspension device according to claim 3, wherein
the differential pressure control valve includes:
a spool switched between four positions, the four positions being an extension-side supply position, a neutral position, a contraction-side supply position, and a fail position, the extension-side supply position being a position at which the extension-side passage is connected to the supply passage and the contraction-side passage is connected to the discharge passage, the neutral position being a position at which the extension-side passage, the contraction-side passage, the supply passage, and the discharge passage communicate with one another, the contraction-side supply position being a position at which the contraction-side passage is connected to the supply passage and the extension-side passage is connected to the discharge passage, the fail position being a position at which the extension-side passage, the contraction-side passage, the supply passage, and the discharge passage communicate with one another;
a solenoid that drives the spool; and
a spring that biases the spool to position the spool at the fail position during non-current application of the solenoid.

6. The suspension device according to claim 2, wherein
the hydraulic pressure circuit includes:
an extension-side check valve disposed in the extension-side passage in parallel with the extension-side damping valve, the extension-side check valve being configured to allow only a flow heading for the extension-side chamber from the switching valve; and
a contraction-side check valve disposed in the contraction-side passage in parallel with the contraction-side damping valve, the contraction-side check valve being configured to allow only a flow heading for the contraction-side chamber from the switching valve.

7. The suspension device according to claim 3, wherein
the hydraulic pressure circuit includes:
an extension-side check valve disposed in the extension-side passage in parallel with the extension-side damping valve, the extension-side check valve being configured to allow only a flow heading for the extension-side chamber from the differential pressure control valve; and
a contraction-side check valve disposed in the contraction-side passage in parallel with the contraction-side damping valve, the contraction-side check valve being configured to allow only a flow heading for the contraction-side chamber from the differential pressure control valve.
